# EUROPEAN PATENT APPLICATION

(11) **EP 4 495 168 A1**
(43) Date of publication of application: **22.01.2025**
(21) Application number: 23770368.1
(22) Date of filing: 27.02.2023
(51) Int. Cl.: C08J 3/22, C08F 293/00, C08J 5/18, C08L 53/00, C08L 53/02, C08L 91/06

(54) **MASTER BATCH COMPOSITION AND AROMATIC VINYL-CONJUGATED DIENE COPOLYMER COMPOSITION TO WHICH SAID MASTER BATCH COMPOSITION IS ADDED**

(30) Priority: 15.03.2022 JP 2022040626
(71) Applicant: Zeon Corporation, Tokyo 100-8246 (JP)
(72) Inventor: ISHII, Yuta, Tokyo 100-8246 (JP)
(74) Representative: Kraus & Lederer PartGmbB
(86) International application number: PCT/JP2023/007146
(87) International publication number: WO 2023/176409

(57) **Abstract**

Provided is a masterbatch composition comprising 30 to 98% by weight of an aromatic vinyl polymer containing at least one aromatic vinyl polymer block, and 2 to 70% by weight of a hydrocarbon compound group containing a plurality of hydrocarbon compounds having different numbers of carbon atoms in the range of 12 or more and 60 or less carbon atoms, wherein when the hydrocarbon compound group is measured by gas chromatography mass spectrometry (GC-MS) to determine ratios of detected areas of the hydrocarbon compound components having different numbers of carbon atoms to the total peak area of the components having carbon atoms in the range of 12 or more and 60 or less carbon atoms where the total peak area of components having 12 or more and 60 or less carbon atoms is regarded as 100%, the total peak area of components having 24 or more and 27 or less carbon atoms is 5% or more, the total peak area of components having 27 or more and 30 or less carbon atoms is 5% or more, the total peak area of components having 30 or more and 33 or less carbon atoms is 5% or more, the total peak area of components having 33 or more and 36 or less carbon atoms is 5% or more, and the total peak area of components having 27 or less carbon atoms is 45% or less.

## Description

### TECHNICAL FIELD

The present invention relates to a masterbatch composition, and an aromatic vinyl-conjugated diene copolymer composition comprising this.

### BACKGROUND ART

Since aromatic vinyl-conjugated diene copolymers such as aromatic vinyl-conjugated diene-aromatic vinyl block copolymers are particularly rich in elasticity and flexible among thermoplastic elastomers, as one of their typical applications, these are used as materials for stretchable films used in hygienic products such as paper diapers and sanitary products.

Since hygienic products such as paper diapers and sanitary products require following properties and fit to movements of wearers, stretchable films are used in a variety of parts thereof. For example, Patent Document 1 discloses a composition for forming an elastic body used in hygienic products such as disposable diapers, the composition comprising specific aromatic vinyl-conjugated diene copolymers and a wax, wherein the wax contains a linear hydrocarbon (n-structure) and a branched hydrocarbon (iso-structure) in a weight ratio (n-structure/iso-structure) of 30/70 to 99/1, and has a melting point of less than 80°C.

### RELATED ART DOCUMENTS

### PATENT DOCUMENTS

Patent Document 1: WO 2020/045496

### SUMMARY OF THE INVENTION

### PROBLEM TO BE SOLVED BY THE INVENTION

On the other hand, aromatic vinyl-conjugated diene copolymers used in applications to stretching members of hygienic products such as shorts-type diapers, which are one of paper diapers, require ozone crack resistance in a wide usage temperature region. However, while the ozone crack resistance near normal temperature (30°C) has been examined in the technique disclosed in Patent Document 1, the ozone crack resistance in a wide temperature region has not been focused, and any specific approach for improving the ozone crack resistance in a wide temperature region is not found.

When additives such as wax are compounded with aromatic vinyl-conjugated diene copolymers, in order to improve ozone crack resistance, as in the technique disclosed in Patent Document 1, the additives such as wax adhere to and are accumulated on a cooling body such as a cooling roll with the elapsed time during formation of film-shaped molded bodies, and are transferred onto molded bodies. These cause a bad appearance, and reduce heat removal efficiency with a cooling body such as a cooling roll, thus reducing production stability. Although a method of adding additives such as wax in the form of a masterbatch composition can be considered, a masterbatch composition having insufficient compatibility causes breakage of films.

The present invention has been made in consideration of such circumstances. An object of the present invention is to provide a masterbatch composition which has high compatibility with an aromatic vinyl-conjugated diene copolymer, can achieve excellent film molding properties when compounded with the aromatic vinyl-conjugated diene copolymer (e.g., can effectively prevent breakage of films or occurrence of a bad appearance when films are formed), and ensure high ozone crack resistance in a wide temperature region.

### MEANS FOR SOLVING PROBLEMS

The present inventors, who have conducted research to achieve the above object, have found that the above object can be achieved by a masterbatch composition comprising 30 to 98% by weight of an aromatic vinyl polymer and 2 to 70% by weight of a hydrocarbon compound group containing a plurality of hydrocarbon compounds having different carbon atoms in specific amounts, and have completed the present invention.

Specifically, the present invention provides a masterbatch composition comprising 30 to 98% by weight of an aromatic vinyl polymer containing at least one aromatic vinyl polymer block, and
2 to 70% by weight of a hydrocarbon compound group containing a plurality of hydrocarbon compounds having different numbers of carbon atoms in the range of 12 or more and 60 or less carbon atoms,
wherein when the hydrocarbon compound group is measured by gas chromatography mass spectrometry (GC-MS) to determine ratios of detected areas of the hydrocarbon compound components having different numbers of carbon atoms to the total peak area of the components having carbon atoms in the range of 12 or more and 60 or less carbon atoms where the total peak area of components having 12 or more and 60 or less carbon atoms is regarded as 100%,
the total peak area of components having 24 or more and 27 or less carbon atoms is 5% or more,
the total peak area of components having 27 or more and 30 or less carbon atoms is 5% or more,
the total peak area of components having 30 or more and 33 or less carbon atoms is 5% or more,
the total peak area of components having 33 or more and 36 or less carbon atoms is 5% or more, and
the total peak area of components having 12 or more and 27 or less carbon atoms is 45% or less.

In the masterbatch composition according to the present invention, preferably, when the hydrocarbon compound group is measured by gas chromatography mass spectrometry (GC-MS) to determine ratios of detected areas of the hydrocarbon compound components having different numbers of carbon atoms to the total peak area of the components having carbon atoms in the range of 12 or more and 60 or less carbon atoms where the total peak area of components having 12 or more and 60 or less carbon atoms is regarded as 100%,
the total peak area of the components having 24 or more and 27 or less carbon atoms is 8 to 40%,
the total peak area of the components having 27 or more and 30 or less carbon atoms is 8 to 50%,
the total peak area of the components having 30 or more and 33 or less carbon atoms is 10 to 45%,
the total peak area of the components having 33 or more and 36 or less carbon atoms is 7 to 30%, and
the total peak area of the components having 12 or more and 27 or less carbon atoms is 10 to 40%.

In the masterbatch composition according to the present invention, preferably, the aromatic vinyl polymer is an aromatic vinyl-conjugated diene copolymer containing at least one aromatic vinyl polymer block and at least one conjugated diene polymer block.

In the masterbatch composition according to the present invention, preferably, the aromatic vinyl-conjugated diene copolymer is an aromatic vinyl-conjugated diene copolymer composition comprising:
a block copolymer A represented by general formula (A): Ar1^{a}-D^{a}-Ar2^{a}, where Ar1^{a} represents an aromatic vinyl polymer block having a weight average molecular weight of 5,000 to 20,000, D^{a} represents a conjugated diene polymer block, and Ar2^{a} represents an aromatic vinyl polymer block having a weight average molecular weight of more than 20,000 and 400,000 or less, and
a block copolymer B represented by general formula (B): Ar1^{b}-Db-Ar2^{b}, where Ar1^{b} and Ar2^{b} each represent an aromatic vinyl polymer block having a weight average molecular weight of 5,000 to 20,000, and D^{b} represents a conjugated diene polymer block.

In the masterbatch composition according to the present invention, preferably, the aromatic vinyl-conjugated diene copolymer is an aromatic vinyl-conjugated diene copolymer composition comprising:
a block copolymer C represented by general formula (C) : (Ar^{c}-D^{c})ₙ-X, where Ar^{c} represents an aromatic vinyl polymer block, D^{c} represents a conjugated diene polymer block, n represents an integer of 2 or more, and X represents a residue of a coupling agent, and
a block copolymer D represented by general formula (D): Ar^{d}-D^{d}, where Ar^{d} represents an aromatic vinyl polymer block, and D^{d} represents a conjugated diene polymer block.

The present invention also provides an aromatic vinyl-conjugated diene copolymer composition comprising an aromatic vinyl-conjugated diene copolymer and the masterbatch composition, the aromatic vinyl-conjugated diene copolymer containing at least one aromatic vinyl polymer block and at least one conjugated diene polymer block.

The present invention also provides an elastic body formed from the aromatic vinyl-conjugated diene copolymer composition.

The present invention also provides a film formed from the aromatic vinyl-conjugated diene copolymer composition.

The present invention also provides a stretching member obtained using the elastic body or the film.

### EFFECTS OF INVENTION

The present invention provides a masterbatch composition which has high compatibility with an aromatic vinyl-conjugated diene copolymer, can achieve excellent film molding properties when compounded with the aromatic vinyl-conjugated diene copolymer (e.g., can effectively prevent breakage of films or occurrence of a bad appearance when films are formed), and ensure high ozone crack resistance in a wide temperature region.

### DESCRIPTION OF EMBODIMENTS

The masterbatch composition according to the present invention comprises 30 to 98% by weight of an aromatic vinyl polymer containing at least one aromatic vinyl polymer block, and
2 to 70% by weight of a hydrocarbon compound group containing a plurality of hydrocarbon compounds having different numbers of carbon atoms in the range of 12 or more and 60 or less carbon atoms.

In the present invention, the hydrocarbon compound group used contains the hydrocarbon compounds such that when the hydrocarbon compound group is measured by gas chromatography mass spectrometry (GC-MS) to determine ratios of detected areas of the hydrocarbon compound components having different numbers of carbon atoms to the total peak area of the components having carbon atoms in the range of 12 or more and 60 or less carbon atoms where the total peak area of components having 12 or more and 60 or less carbon atoms is regarded as 100%,
the total peak area of components having 24 or more and 27 or less carbon atoms is 5% or more,
the total peak area of components having 27 or more and 30 or less carbon atoms is 5% or more,
the total peak area of components having 30 or more and 33 or less carbon atoms is 5% or more,
the total peak area of components having 33 or more and 36 or less carbon atoms is 5% or more, and
the total peak area of components having 12 or more and 27 or less carbon atoms is 45% or less.

The masterbatch composition according to the present invention is a masterbatch composition used for compounding with the aromatic vinyl-conjugated diene copolymer, and more specifically, is a masterbatch composition for suitably compounding the hydrocarbon compound group with the aromatic vinyl-conjugated diene copolymer. Moreover, the masterbatch composition according to the present invention has high compatibility with an aromatic vinyl-conjugated diene copolymer, can achieve excellent film molding properties when compounded with the aromatic vinyl-conjugated diene copolymer (e.g., can effectively prevent breakage of films or occurrence of a bad appearance when films are formed), and ensure high ozone crack resistance in a wide temperature region.

### <Aromatic vinyl polymer>

The aromatic vinyl polymer constituting the masterbatch composition according to the present invention contains at least one aromatic vinyl polymer block. It is sufficient that the aromatic vinyl polymer contains at least one aromatic vinyl polymer block, and is not particularly limited. Examples thereof include homopolymers of aromatic vinyl monomers (polymers prepared by polymerizing only one or two or more aromatic vinyl monomers), aromatic vinyl-conjugated diene copolymers containing at least one aromatic vinyl polymer block and at least one conjugated diene polymer block.

It is sufficient that the homopolymers of aromatic vinyl monomers are polymers prepared by polymerizing only one or two or more aromatic vinyl monomers, and are not particularly limited. Examples of such aromatic vinyl monomers include styrene, α-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene, vinylnaphthalene, and the like. Among these, use of styrene is preferred. These aromatic vinyl monomers can be used alone or in combination.

It is sufficient that the aromatic vinyl-conjugated diene copolymers are block copolymers containing at least one aromatic vinyl polymer block and at least one conjugated diene polymer block, and are not particularly limited. Suitable examples thereof include the following aromatic vinyl-conjugated diene copolymer composition.

Specifically, suitable examples thereof include an aromatic vinyl-conjugated diene copolymer composition containing:
a block copolymer A represented by general formula (A) : Ar1^{a}-D^{a}-Ar2^{a}, and
a block copolymer B represented by general formula (B): Ar1^{b}-D^{b}-Ar2^{b}.

The block copolymer A represented by general formula (A): Ar1^{a}-D^{a}-Ar2^{a} is suitably a block copolymer as follows.

Specifically, in the formula, Ar1^{a} represents an aromatic vinyl polymer block having a weight average molecular weight of 5,000 to 20,000, D^{a} represents a conjugated diene polymer block, and Ar2^{a} represents an aromatic vinyl polymer block having a weight average molecular weight of more than 20,000 and 400,000 or less.

The content of the aromatic vinyl monomer unit of the block copolymer A is 25 to 80% by weight relative to the total monomer units constituting the block copolymer A.

The block copolymer B represented by general formula (B): Ar1^{b}-D^{b}-Ar2^{b} is suitably a block copolymer as follows.

Specifically, in the formula, Ar1^{b} and Ar2^{b} each represent an aromatic vinyl polymer block having a weight average molecular weight of 5,000 to 20,000, and D^{b} represents a conjugated diene polymer block.

The content of the aromatic vinyl monomer unit of the block copolymer B is 10 to 90% by weight relative to the total monomer units constituting the block copolymer B.

### (Block copolymer A)

The block copolymer A is a copolymer represented by general formula (A) below:

general formula (A) : Ar1^{a}-D^{a}-Ar2^{a}

(where Ar1^{a} represents an aromatic vinyl polymer block having a weight average molecular weight of 5,000 to 20,000, D^{a} represents a conjugated diene polymer block, and Ar2^{a} represents an aromatic vinyl polymer block having a weight average molecular weight of more than 20,000 and 400,000 or less.)

The aromatic vinyl polymer block (Ar1^{a}) and the aromatic vinyl polymer block (Ar2^{a}) are each a polymer block composed of an aromatic vinyl monomer unit obtained by polymerizing an aromatic vinyl monomer, as the main repeating unit.

The aromatic vinyl monomer used to constitute the aromatic vinyl monomer unit for the aromatic vinyl polymer block (Ar1^{a}) and the aromatic vinyl polymer block (Ar2^{a}) is not particularly limited as long as it is any aromatic vinyl compound. Examples thereof include styrene, α-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene, vinylnaphthalene, and the like. Among these, use of styrene is preferred. These aromatic vinyl monomers can be used alone or in combination. Two of these aromatic vinyl polymer blocks, if present, may be composed of the same aromatic vinyl monomer unit, or may be composed of different aromatic vinyl monomer units.

The aromatic vinyl polymer block (Ar1^{a}) and the aromatic vinyl polymer block (Ar2^{a}) may contain a different monomer unit as long as the aromatic vinyl monomer unit is the main repeating unit. Examples of monomers constituting different monomer units other than the aromatic vinyl monomer unit which can be contained in the aromatic vinyl polymer block (Ar1^{a}) and the aromatic vinyl polymer block (Ar2^{a}) include conjugated diene monomers such as 1,3-butadiene and isoprene (2-methyl-1,3-butadiene), α,β-unsaturated nitrile monomers, unsaturated carboxylic acid or acid anhydride monomers, unsaturated carboxylic acid ester monomers, non-conjugated diene monomers, and the like. The content of the different monomer unit other than the aromatic vinyl monomer unit in the aromatic vinyl polymer block (Ar1^{a}) and the aromatic vinyl polymer block (Ar2^{a}) is preferably 20% by weight or less, more preferably 10% by weight or less, particularly preferably substantially 0% by weight. In other words, each of the aromatic vinyl polymer block (Ar1^{a}) and the aromatic vinyl polymer block (Ar2^{a}) is preferably composed substantially only of one or two or more types of aromatic vinyl monomer units, and particularly preferably composed of only a styrene unit.

In the block copolymer A, the aromatic vinyl polymer block (Ar1^{a}) and the aromatic vinyl polymer block (Ar2^{a}) differ in weight average molecular weight.

The weight average molecular weight of the aromatic vinyl polymer block (Ar1^{a}) is 5,000 to 20,000, more preferably 6,000 to 18,000, still more preferably 7,000 to 16,000.

The weight average molecular weight of the aromatic vinyl polymer block (Ar2^{a}) is more than 20,000 and 400,000 or less, more preferably 25,000 to 300,000, still more preferably 30,000 to 200,000, further still more preferably 40,000 to 100,000.

The conjugated diene polymer block (D^{a}) is a polymer block composed of a conjugated diene monomer unit obtained by polymerizing a conjugated diene monomer, as the main repeating unit.

The conjugated diene monomer used to constitute the conjugated diene monomer unit constituting the conjugated diene polymer block (D^{a}) is not particularly limited as long as it is a conjugated diene compound. Examples thereof include 1,3-butadiene, isoprene, 2,3-dimethyl-1,3-butadiene, 2-chloro-1,3-butadiene, 1,3-pentadiene, 1,3-hexadiene, myrcene, farnesene, and the like. Among these, use of 1,3-butadiene and/or isoprene is preferred, and use of isoprene is particularly preferred. These conjugated diene monomers can be used alone or in combination. Furthermore, unsaturated bonds of the conjugated diene polymer block (D^{a}) may be partially subjected to a hydrogenation reaction.

The conjugated diene block (D^{a}) may contain a different monomer unit as long as the conjugated diene monomer unit is the main repeating unit. Examples of monomers constituting different monomer units other than the conjugated diene monomer unit which can be contained in the conjugated diene polymer block (D^{a}) include aromatic vinyl monomers such as styrene and α-methylstyrene, α,β-unsaturated nitrile monomers, unsaturated carboxylic acid or acid anhydride monomers, unsaturated carboxylic acid ester monomers, and non-conjugated diene monomers. The content of the different monomer unit other than the conjugated diene monomer unit in the conjugated diene polymer block (D^{a}) is preferably 20% by weight or less, more preferably 10% by weight or less, particularly preferably substantially 0% by weight. In other words, the conjugated diene polymer block (D^{a}) is preferably composed substantially only of one or two or more types of conjugated diene monomer units, and particularly preferably composed of only isoprene units.

Although not particularly limited, the vinyl bond content in the conjugated diene polymer block (D^{a}) (the proportion of 1,2-vinyl bond units and 3,4-vinyl bond units in the total conjugated diene monomer units in the conjugated diene polymer block (D^{a})) is preferably 1 to 20 mol%, more preferably 2 to 15 mol%, particularly preferably 3 to 10 mol%. If the vinyl bond content is too large, the flexibility of an elastic body to be obtained tends to be impaired.

The weight average molecular weight of the conjugated diene polymer block (D^{a}) is preferably 40,000 to 400,000, more preferably 45,000 to 350,000, still more preferably 50,000 to 300,000, further still more preferably 70,000 to 130,000.

The weight average molecular weight of the block copolymer A (i.e., the weight average molecular weight of the entire block copolymer A) is preferably 65,000 to 800,000, more preferably 70,000 to 700,000, still more preferably 75,000 to 650,000, further still more preferably 120,000 to 240,000.

In the present invention, the weight average molecular weights of the polymer blocks and the weight average molecular weight of the entire block polymer are determined as values in terms of polystyrene by measurement of high performance liquid chromatography.

Further, the weight average molecular weights of the polymer blocks and the weight average molecular weight of the entire block polymer can be controlled by adjusting the amounts of the monomers to be used for forming its corresponding polymer block and the amount of the polymerization initiator to be used to obtain the block copolymer by the polymerization reaction.

The content of the aromatic vinyl monomer unit of the block copolymer A is 25 to 80% by weight relative to the total monomer units constituting the block copolymer A.

Preferably, the block copolymer A is obtained by a production method of forming the polymer block by sequentially polymerizing an aromatic vinyl monomer, a conjugated diene monomer, and then an aromatic vinyl monomer in this order. Therefore, it is preferable that the block copolymer A do not contain a residue of a coupling agent. Details of such a production method will be described later. The production method is not particularly limited as long as it can produce a block copolymer A having a structure represented by Ar1^{a}-D^{a}-Ar2^{a}, and the block copolymer A may be produced using a coupling agent, and may contain a residue of the coupling agent.

### (Block copolymer B)

The block copolymer B is a copolymer represented by general formula (B) below:

general formula (B): Ar1^{b}-D^{b}-Ar2^{b}

(where Ar1^{b} and Ar2^{b} each represent an aromatic vinyl polymer block having a weight average molecular weight of 5,000 to 20,000, and D^{b} represents a conjugated diene polymer block.)

The aromatic vinyl polymer block (Ar1^{b}) and the aromatic vinyl polymer block (Ar2^{b}) are each a polymer block composed of an aromatic vinyl monomer unit obtained by polymerizing an aromatic vinyl monomer, as the main repeating unit.

The aromatic vinyl monomer used to constitute the aromatic vinyl monomer units of the aromatic vinyl polymer block (Ar1^{b}) and the aromatic vinyl polymer block (Ar2^{b}) is not particularly limited as long as it is an aromatic vinyl compound, and examples thereof include the same aromatic vinyl monomers as those listed the aromatic vinyl polymer block (Ar1^{a}) and the aromatic vinyl polymer block (Ar2^{a}) described above.

The aromatic vinyl polymer block (Ar1^{b}) and the aromatic vinyl polymer block (Ar2^{b}) may contain a different monomer unit as long as the aromatic vinyl monomer unit is the main repeating unit. Examples of monomers constituting different monomer units other than the aromatic vinyl monomer units may be the same monomers as those listed in the aromatic vinyl polymer block (Ar1^{a}) and the aromatic vinyl polymer block (Ar2^{a}), and the content may also be the same as above. Each of the aromatic vinyl polymer block (Ar1^{b}) and the aromatic vinyl polymer block (Ar2^{b}) is preferably composed substantially only of one or two or more types of aromatic vinyl monomer units, and particularly preferably composed of only a styrene unit.

In the block copolymer B, the aromatic vinyl polymer block (Ar1^{b}) and the aromatic vinyl polymer block (Ar2^{b}) both have a weight average molecular weight in the range of 5,000 to 20,000.

The aromatic vinyl polymer block (Ar1^{b}) and the aromatic vinyl polymer block (Ar2^{b}) have a weight average molecular weight of 5,000 to 20,000, more preferably 6,000 to 18,000, still more preferably 7,000 to 16,000.

The weight average molecular weight of the aromatic vinyl polymer block (Ar1^{b}) and that of the aromatic vinyl polymer block (Ar2^{b}) may be equal or different as long as they fall within the above ranges, and are preferably substantially equal. Preferably, the weight average molecular weight of the aromatic vinyl polymer block (Ar1^{b}) and that of the aromatic vinyl polymer block (Ar2^{b}) are substantially equal to the weight average molecular weight of the aromatic vinyl polymer block (Ar1^{a}) having a relatively small weight average molecular weight in the block copolymer A.

The conjugated diene polymer block (D^{b}) is a polymer block composed of a conjugated diene monomer unit obtained by polymerizing a conjugated diene monomer, as the main repeating unit.

The conjugated diene monomer used to constitute the conjugated diene monomer unit in the conjugated diene polymer block (D^{b}) is not particularly limited as long as it is a conjugated diene compound, and examples thereof include the same conjugated diene monomers as those listed in the conjugated diene polymer block (D^{a}) .

The conjugated diene polymer block (D^{b}) may contain a different monomer unit as long as the conjugated diene monomer unit is the main repeating unit. Examples of monomers forming a different monomer unit other than the conjugated diene monomer unit include the same monomers as those listed in the conjugated diene polymer block (D^{a}), and the content and the vinyl bond content may also be the same as above. The conjugated diene polymer block (D^{b}) is also preferably composed substantially only of one or two or more types of conjugated diene monomer units, and particularly preferably composed of only isoprene units.

Preferably, the vinyl bond content of the conjugated diene polymer block (D^{b}) is substantially equal to that of the conjugated diene polymer block (D^{a}) in the block copolymer A.

The conjugated diene polymer block (D^{b}) has a weight average molecular weight of preferably 40,000 to 400,000, more preferably 45,000 to 350,000, still more preferably 50,000 to 300,000, further still more preferably 70,000 to 130,000.

Preferably, the weight average molecular weight of the conjugated diene polymer block (D^{b}) is substantially equal to the weight average molecular weight of the conjugated diene polymer block (D^{a}) in the block copolymer A.

The weight average molecular weight of the block copolymer B (i.e., the weight average molecular weight of the entire block copolymer B) is preferably 65,000 to 800,000, more preferably 70,000 to 700,000, still more preferably 75,000 to 600,000, further still more preferably 80,000 to 160,000.

The content of the aromatic vinyl monomer unit of the block copolymer B is 10 to 90% by weight, preferably 14 to 50% by weight, still more preferably 16 to 40%, most preferably 20 to 30% by weight relative to the total monomer units constituting the block copolymer B.

Preferably, the block copolymer B is obtained by a production method of forming the polymer block by sequentially polymerizing an aromatic vinyl monomer, a conjugated diene monomer, and then an aromatic vinyl monomer in this order. Therefore, it is preferable that the block copolymer B do not contain a residue of a coupling agent. Details of such a production method will be described later. The production method is not particularly limited as long as it can produce a block copolymer having a structure represented by Ar1^{b}-Db-Ar2^{b}, and the block copolymer may be produced using a coupling agent and may contain a residue of the coupling agent.

For the proportion of the content of the block copolymer A and that of the block copolymer B in the aromatic vinyl-conjugated diene copolymer composition used in the present invention, it is preferred that the content of the block copolymer A be 10 to 70% by weight and that of the block copolymer B be 30 to 90% by weight, it is more preferred that the content of the block copolymer A be 30 to 55% by weight and that of the block copolymer B be 45 to 70% by weight, it is still more preferred that the content of the block copolymer A be 35 to 50% by weight and that of the block copolymer B be 50 to 65% by weight, and it is further still more preferred that the content of the block copolymer A be 36 to 44% by weight and that of the block copolymer B be 56 to 64% by weight.

The block copolymer A and the block copolymer B can each be produced by a conventional method, and examples of the most general production method include a method of sequentially polymerizing an aromatic vinyl monomer and a conjugated diene monomer by living anionic polymerization to form polymer blocks, and optionally reacting these polymer blocks with a coupling agent to perform coupling. Alternatively, a method of sequentially polymerizing an aromatic vinyl monomer, a conjugated diene monomer, and then an aromatic vinyl monomer in this order to form polymer blocks may be used. Alternatively, these block copolymers can each be produced by separately producing polymers by a conventional polymerization method, compounding other polymer components and the like as needed, and mixing these by a conventional method such as kneading or solution mixing. Alternatively, as described later, the block copolymers A and B can also be produced at the same time.

Alternatively, in the present invention, a commercially available block copolymer can also be used, and "Quintac (registered trademark)" (available from ZEON Corporation), "JSR Corporation-SIS (registered trademark)" (available from JSR Corporation), "Vector (registered trademark)" (available from DEXCO Polymers L.P.), "Asaprene (registered trademark)", "Tufprene (registered trademark)", "Tuftec (registered trademark)" (available from Asahi Kasei Chemicals Corporation), "Septon (registered trademark)" (available from Kuraray Co., Ltd.), "Kraton (registered trademark)" (available from Kraton Corporation), and the like can be used, for example.

Preferably, the block copolymer A and the block copolymer B are each produced by a method of sequentially polymerizing an aromatic vinyl monomer, a conjugated diene monomer, and then an aromatic vinyl monomer in this order to form polymer blocks.

More specifically, the block copolymer A and the block copolymer B are preferably produced by the following production method. In other words, preferred is a method comprising:
a first polymerization step of obtaining a solution containing aromatic vinyl polymer block chains by polymerizing monomers containing an aromatic vinyl monomer in a solvent in the presence of a polymerization initiator;
a second polymerization step of obtaining a solution containing diblock chains by adding monomers containing a conjugated diene monomer to the solution containing aromatic vinyl polymer block chains, and performing polymerization;
a third polymerization step of obtaining a solution containing triblock chains by adding monomers containing an aromatic vinyl monomer to the solution containing diblock chains, and performing polymerization;
a termination step of obtaining a solution containing the block copolymer B and diblock chains by adding a polymerization terminator to the solution containing diblock chains in an amount of less than 1 molar equivalents relative to active terminals of the triblock chains to deactivate part of the active terminals; and
a fourth polymerization step of obtaining a solution containing the block copolymer A and the block copolymer B by adding monomers containing an aromatic vinyl monomer to the solution containing triblock chains and the block copolymer B, and performing polymerization.

In the above production method, first, monomers containing an aromatic vinyl monomer as the main component are polymerized in a solvent in the presence of a polymerization initiator (first polymerization step). Polymerization initiators to be used can be organic alkali metal compounds, organic alkaline earth metal compounds, organic lanthanoid rare earth element compounds, and the like which are generally known to have anionic polymerization activity to aromatic vinyl monomers and conjugated diene monomers. As organic alkali metal compounds, organic lithium compounds having one or more lithium atoms in one molecule are particularly suitably used, and specific examples thereof include organic monolithium compounds such as ethyllithium, n-propyllithium, isopropyllithium, n-butyllithium, sec-butyllithium, t-butyllithium, hexyllithium, phenyllithium, stilbenelithium, dialkylaminolithium, diphenylaminolithium, and ditrimethylsilylaminolithium; organic dilithium compounds such as methylenedilithium, tetramethylenedilithium, hexamethylenedilithium, isoprenyldilithium, and 1,4-dilithio-ethylcyclohexane; organic trilithium compounds such as 1,3,5-trilithiobenzene; and the like. Among these, organic monolithium compounds are particularly suitably used.

Examples of organic alkaline earth metal compounds used as the polymerization initiator include n-butylmagnesium bromide, n-hexylmagnesium bromide, ethoxycalcium, calcium stearate, t-butoxystrontium, ethoxybarium, isopropoxybarium, ethylmercaptobarium, t-butoxybarium, phenoxybarium, diethylaminobarium, barium stearate, ethylbarium, and the like. Specific examples of other polymerization initiators include those which form a homogeneous system in an organic solvent to have living polymerizability, such as composite catalysts composed of lanthanoid rare earth metal compounds (including neodymium, samarium, or gadolinium)/alkylaluminum/alkylaluminum halide/alkylaluminum hydride; metallocene catalysts containing titanium, vanadium, samarium, gadolinium, or the like; and the like. These polymerization initiators may be used alone or in combination as a mixture.

Although the amount of polymerization initiator used can be determined according to the target molecular weight and is not particularly limited, the amount is preferably 0.01 to 20 mmol, more preferably 0.05 to 15 mmol, still more preferably 0.1 to 10 mmol relative to 100 g of the total monomers used.

The solvent used in polymerization can be any solvent inactive to the polymerization initiator, and a linear hydrocarbon solvent, a cyclic hydrocarbon solvent, or a mixed solvent thereof is used, for example. Examples of the linear hydrocarbon solvent include linear alkanes and alkenes having 4 to 6 carbon atoms such as n-butane, isobutane, 1-butene, isobutylene, trans-2-butene, cis-2-butene, 1-pentene, trans-2-pentene, cis-2-pentene, n-pentane, isopentane, neopentane, and n-hexane. Specific examples of the cyclic hydrocarbon solvent include aromatic compounds such as benzene, toluene, and xylene; alicyclic hydrocarbon compounds such as cyclopentane and cyclohexane. These solvents may be used alone or in combination as a mixture.

Although not particularly limited, the amount of the solvent used in polymerization is preferably set such that the content of the block copolymer in the finally obtained block copolymer solution falls within the range of preferably 5 to 60% by weight, more preferably 10 to 55% by weight, particularly preferably 20 to 50% by weight.

A Lewis base compound may be added to a reactor used in polymerization to control the structures of the polymer blocks. Examples of the Lewis base compound include ethers such as tetrahydrofuran, diethyl ether, dioxane, ethylene glycol dimethyl ether, ethylene glycol dibutyl ether, diethylene glycol dimethyl ether, and diethylene glycol dibutyl ether; tertiary amines such as tetramethylethylenediamine, trimethylamine, triethylamine, pyridine, and quinuclidine; alkali metal alkoxides such as potassium t-amyloxide and potassium t-butyloxide; phosphines such as triphenylphosphine; and the like. These Lewis base compounds may be used alone or in combination, and are appropriately selected in the range not impairing the object of the present invention.

The Lewis base compound can be added to the polymerization reaction at any timing, which may be appropriately determined according to the structures of the block copolymers. For example, the Lewis base compounds may be preliminarily added before polymerization is started, or may be added after the polymer blocks are partially polymerized. Furthermore, the Lewis base compound may be preliminarily added before polymerization is started, and may be further added after the polymer blocks are partially polymerized.

The temperature for the polymerization reaction is preferably 10 to 150°C, more preferably 30 to 130°C, still more preferably 40 to 90°C. Although the time needed for polymerization varies according to the condition, the time is usually within 48 hours, preferably 0.5 to 10 hours. The polymerization pressure is not particularly limited, and polymerization may be performed at a pressure enough to maintain the monomer and the solvent in liquid phases at a polymerization temperature in the above range.

Under the above conditions, a solution containing aromatic vinyl polymer block chains can be obtained by polymerizing the monomers containing an aromatic vinyl monomer as the main component in the solvent using the polymerization initiator. Note that the aromatic vinyl polymer block chains obtained by polymerization usually have an active terminal. The obtained aromatic vinyl polymer block chains will form the aromatic vinyl polymer block (Ar1^{a}) or the aromatic vinyl polymer block (Ar1^{b}) . Thus, the amounts of the monomers used in the first polymerization step can be determined according to the weight average molecular weight of the aromatic vinyl polymer block (Ar1^{a}) and that of the aromatic vinyl polymer block (Ar1^{b}) .

In the next step, monomers containing a conjugated diene monomer as the main component are added to the solution containing aromatic vinyl polymer block chains prepared in the first polymerization step, and polymerization is performed (second polymerization step). Thereby, a solution containing diblock chains can be prepared. The diblock chains produced through polymerization usually have an active terminal. In the diblock chains produced through the second polymerization step, the polymer chain produced through the first polymerization step which will form the aromatic vinyl polymer block (Ar1^{a}) or the aromatic vinyl polymer block (Ar1^{b}) is further bonded to the polymer chain which will form the conjugated diene polymer block (D^{a}) or the conjugated diene polymer block (D^{b}). For this reason, the amounts of the monomers used in the second polymerization step may be determined according to the weight average molecular weight of the conjugated diene polymer block (D^{a}) or the conjugated diene polymer block (D^{b}). The temperature for the polymerization reaction, the polymerization time, and the polymerization pressure may be controlled within the same ranges as those in the first polymerization step.

In the next step, monomers containing an aromatic vinyl monomer as the main component are added to the solution containing diblock chains prepared in the second polymerization step, and polymerization is performed (third polymerization step). Thereby, a solution containing diblock chains can be obtained. Note that the triblock chains obtained by polymerization usually have an active terminal. Further, in the triblock chains produced in the third polymerization step, the polymer chain produced in the second polymerization step which will form the aromatic vinyl polymer block (Ar1^{a}) or the aromatic vinyl polymer block (Ar1^{b}) and the conjugated diene polymer block (D^{a}) or the conjugated diene polymer block (D^{b}) is further bonded to the polymer chain which will form a part of the aromatic vinyl polymer block (Ar2^{a}) or the aromatic vinyl polymer block (Ar2^{b}). For this reason, the amounts of the monomers used in the third polymerization step may be determined according to the weight average molecular weight of the aromatic vinyl polymer block (Ar2^{b}). The temperature for the polymerization reaction, the polymerization time, and the polymerization pressure may be controlled within the same ranges as those in the first polymerization step.

Then, a polymerization terminator is added to the solution containing triblock chains obtained in the third polymerization step in an amount of less than 1 molar equivalents relative to the active terminals of the triblock chains (termination step) . Thus, part of the active terminals of the triblock chains is deactivated to obtain a block copolymer in which the active terminals are partially deactivated. This block copolymer is the block copolymer B represented by general formula (B) : Ar1^{b}-D^{b}-Ar2^{b}.

The polymerization terminator is not particularly limited as long as it can react with and deactivate an active terminal and no longer reacts with other active terminals after reacting with one active terminal. Preferred are polymerization terminators which are compounds which do not contain a halogen atom from the viewpoint of suppressing moisture absorption of the obtained copolymer. Among them, polymerization terminators which generate a metal alkoxide, a metal aryl oxide, or a metal hydroxide when reacted with the active terminals are particularly preferred. Examples of compounds particularly preferably used as the polymerization terminator include water, monohydric alcohols such as methanol and ethanol, and monohydric phenols such as phenol and cresol.

The amount of the polymerization terminator to be used is determined according to the weight ratio of the block copolymer A and the block copolymer B and is not particularly limited as long as it falls within the range of less than 1 molar equivalents relative to the active terminals of the triblock chains, but is in the range of usually 0.18 to 0.91 molar equivalents, preferably 0.35 to 0.80 molar equivalents relative to the active terminals.

As described above, when the polymerization terminator is added to the solution containing triblock chains having active terminals in an amount of less than 1 molar equivalents relative to the active terminals thereof, part of the triblock chains having active terminals is deactivated, and a polymer in which its active terminals are partially deactivated is obtained as the block copolymer B. Then, a portion of triblock chains having active terminals which have not reacted with the polymerization terminator remains unreacted in the solution.

Then, monomers containing an aromatic vinyl monomer as the main component are added to the solution containing triblock chains and the block copolymer B obtained in the termination step, and polymerization is performed (the fourth polymerization step). Thereby, a solution containing the block copolymer A represented by the general formula (A) : Ar1^{a}-D^{a}-Ar2^{a} and the block copolymer B can be obtained. In the block copolymer A produced in the fourth polymerization step, a polymer chain which forms a part of an aromatic vinyl polymer block (Ar2^{a}) is further bonded to the active terminal of the triblock chain obtained in the third polymerization step. For this reason, the amounts of the monomers used in the fourth polymerization step may be determined according to the weight average molecular weight of the aromatic vinyl polymer block (Ar2^{a}). The temperature for the polymerization reaction, the polymerization time, and the polymerization pressure may be controlled within the same ranges as those in the first polymerization step.

After the fourth polymerization step, the polymer component may be recovered from the solution containing the block copolymer A and the block copolymer B (recovery step). The method of recovery may be according to a conventional method, and is not particularly limited. For example, after completion of the reaction, if necessary, a polymerization terminator such as water, methanol, ethanol, propanol, hydrochloric acid, or citric acid is added, and if necessary, an additive such as an antioxidant is further added, and then a known method such as drying or steam stripping is directly applied to the solution to be recovered. When the polymer component is recovered as a slurry by applying steam stripping or the like, the polymer component may be dehydrated using any dehydrator such as an extruder type squeezer to obtain crumbs having a moisture content of a predetermined value or less, and the crumbs may be dried using any dryer such as a band dryer or an expansion extrusion dryer. The block copolymer obtained as described above may be processed into a pellet shape or the like according to a conventional method, and then used.

As described above, the block copolymer A and the block copolymer B can be produced.

Note that when only the block copolymer B is obtained, examples of the production method include a method of deactivating all of the active terminals in the termination step, and not performing the polymerization in the fourth polymerization step.

As the aromatic vinyl-conjugated diene copolymer, the following aromatic vinyl-conjugated diene copolymer composition can also be suitably used.

Specifically, suitable examples thereof include an aromatic vinyl-conjugated diene copolymer composition comprising:
a block copolymer C represented by general formula (C): (Ar^{c}-D^{c})ₙ-X, and
a block copolymer D represented by general formula (D): Ar^{d}-D^{d}.

The block copolymer C represented by general formula (C): (Ar^{c}-D^{c})ₙ-X is suitably a block copolymer as follows.

Specifically, in the formula, Ar^{c} represents an aromatic vinyl polymer block, D^{c} represents a conjugated diene polymer block, n represents an integer of 2 or more, and X represents a residue of a coupling agent.

The content of the aromatic vinyl monomer unit of the block copolymer C is preferably less than 50% by weight relative to the total monomer units constituting the block copolymer C, although not particularly limited thereto.

The block copolymer D represented by general formula (D): Ar^{d}-D^{d} is suitably a block copolymer as follows.

Specifically, in the formula, Ar^{d} represents an aromatic vinyl polymer block, and D^{d} represents a conjugated diene polymer block.

### (Block copolymer C)

The block copolymer C is a copolymer represented by general formula (C) below:

general formula (C): (Ar^{c}-D^{c})ₙ-X

(where Ar^{c} represents an aromatic vinyl polymer block, D^{c} represents a conjugated diene polymer block, n represents an integer of 2 or more, and X represents a residue of a coupling agent.)

The block copolymer C has a structure in which n of diblock structures (Ar^{c}-D^{c}) are bonded to each other via the residue (X) of the coupling agent. In general formula (C), n represents the number of branches of the block copolymer C. The block copolymer C may be a mixture of two or more block copolymers composed of different numbers of diblock structures bonded to each other. n is an integer of 2 or more, preferably an integer of 2 to 8, more preferably an integer of 2 to 4. The residue (X) of the coupling agent is not particularly limited as long as it is a residue of an n-valent coupling agent. Preferred is a residue of a silicon atom-containing coupling agent, and more preferred is a residue of a halogenated silane or an alkoxysilane. Examples of the coupling agent constituting the residue of the coupling agent include those described later.

Among these, the block copolymer C is particularly preferably a mixture of a block copolymer C1 where n is 2, a block copolymer C2 where n is 3, and a block copolymer C3 where n is 4. In this case, the weight ratio of the block copolymers C1 to C3 (C1/C2/C3) is preferably 40 to 80/30 to 10/30 to 10.

The aromatic vinyl polymer block (Ar^{c}) is a polymer block composed of an aromatic vinyl monomer unit obtained by polymerizing an aromatic vinyl monomer, as the main repeating unit.

The aromatic vinyl monomer used for constituting the aromatic vinyl monomer unit in the aromatic vinyl polymer block (Ar^{c}) is not particularly limited as long as it is an aromatic vinyl compound, and examples thereof include the same aromatic vinyl monomers as those listed in the aromatic vinyl polymer block (Ar1^{a}) and the aromatic vinyl polymer block (Ar2^{a}) described above.

The aromatic vinyl polymer block (Ar^{c}) may contain a different monomer unit as long as the aromatic vinyl monomer unit is the main repeating unit. Examples of monomers constituting different monomer units other than the aromatic vinyl monomer unit include the same monomers as those listed in the aromatic vinyl polymer block (Ar1^{a}) and the aromatic vinyl polymer block (Ar2^{a}) described above, and the content thereof may be the same as described above. Further, the aromatic vinyl polymer blocks in the block copolymer C may be composed of the same aromatic vinyl monomer unit, or may be composed of different aromatic vinyl monomer units. The aromatic vinyl polymer block (Ar^{c}) is preferably composed substantially only of one or two or more types of aromatic vinyl monomer units, and particularly preferably composed of only a styrene unit.

The aromatic vinyl polymer block (Ar^{c}) has a weight average molecular weight of preferably 4,000 to 18,000, more preferably 5,000 to 16,000, still more preferably 6,000 to 14,000.

The weight average molecular weights of a plurality of aromatic vinyl polymer blocks (Ar^{c}) in the block copolymer C may be equal or different as long as they fall within the above ranges, but is preferably substantially equal.

The conjugated diene polymer block (D^{c}) is a polymer block composed of a conjugated diene monomer unit obtained by polymerizing a conjugated diene monomer, as the main repeating unit.

The conjugated diene monomer used to constitute the conjugated diene monomer unit in the conjugated diene polymer block (D^{c}) is not particularly limited as long as it is a conjugated diene compound, and examples thereof include the same conjugated diene monomers as those listed in the conjugated diene polymer block (D^{a}) described above. Further, the conjugated diene polymer block in the block copolymer C may be composed of the same conjugated diene monomer unit, or may be composed of different conjugated diene monomer units.

Further, the conjugated diene polymer block (D^{c}) may include a different monomer unit as long as the conjugated diene monomer unit is the main repeating unit. Examples of monomers constituting different monomer units other than the conjugated diene monomer unit include the same monomers as those listed in the conjugated diene polymer block (D^{a}) described above, and the content thereof and the vinyl bond content may be the same as described above. The conjugated diene polymer block (D^{c}) is preferably composed substantially only of one or two or more types of conjugated diene monomer units, and particularly preferably composed of only isoprene units.

The weight average molecular weight of the conjugated diene polymer block (D^{c}) is preferably 20,000 to 200,000, more preferably 25,000 to 180,000, still more preferably 30,000 to 150,000, further still more preferably 70,000 to 130,000.

The weight average molecular weights of a plurality of conjugated diene polymer blocks (D^{c}) in the block copolymer C may be equal or different as long as they fall within the above ranges, but are preferably substantially equal.

The weight average molecular weight of the block copolymer C (i.e., the weight average molecular weight of the entire block copolymer C) is preferably 60,000 to 800,000, more preferably 80,000 to 600,000, still more preferably 180,000 to 320,000.

Although not particularly limited, the content of the aromatic vinyl monomer unit of the block copolymer C is preferably less than 50% by weight, preferably less than 40% by weight, still more preferably less than 30% by weight, further still more preferably less than 20% by weight, most preferably less than 16% by weight relative to the total monomer units constituting the block copolymer C. The lower limit can be 5% by weight or more, although not particularly limited thereto.

Preferably, the block copolymer C is obtained by a production method of polymerizing the aromatic vinyl monomer and the conjugated diene monomer to form diblock chains, and reacting the diblock chains with a coupling agent to perform coupling. Thus, the block copolymer C contains residues of the coupling agent. Details of such a production method will be described later.

### (Block copolymer D)

The block copolymer D is a copolymer represented by general formula (D) below:

general formula (D): Ar^{d}-D^{d}

(where Ar^{d} represents an aromatic vinyl polymer block, and D^{d} represents a conjugated diene polymer block.)

The aromatic vinyl polymer block (Ar^{d}) is a polymer block composed of an aromatic vinyl monomer unit obtained by polymerizing an aromatic vinyl monomer, as the repeating unit.

The aromatic vinyl monomer used to constitute the aromatic vinyl monomer unit in the aromatic vinyl polymer block (Ar^{d}) is not particularly limited as long as it is an aromatic vinyl compound, and examples thereof include the same aromatic vinyl monomers as those listed in the aromatic vinyl polymer block (Ar1^{a}) and the aromatic vinyl polymer block (Ar2^{a}) described above.

The aromatic vinyl polymer block (Ar^{d}) may contain a different monomer unit as long as the aromatic vinyl monomer unit is the main repeating unit, and examples of monomers forming a different monomer unit other than the aromatic vinyl monomer unit include the same monomers as those listed in the aromatic vinyl polymer block (Ar1^{a}) and the aromatic vinyl polymer block (Ar2^{a}) described above, and the content thereof may be the same as described above. The aromatic vinyl polymer block (Ar^{d}) is also preferably composed substantially only of one or two or more types of aromatic vinyl monomer units, and particularly preferably composed of only a styrene unit.

The weight average molecular weight of the aromatic vinyl polymer block (Ar^{d}) is preferably 4,000 to 18,000, more preferably 5,000 to 16,000, still more preferably 6,000 to 14,000.

Preferably, the weight average molecular weight of the aromatic vinyl polymer block (Ar^{d}) is substantially equal to that of the aromatic vinyl polymer block (Ar^{c}) of the block copolymer C.

The conjugated diene polymer block is a polymer block composed of a conjugated diene monomer unit obtained by polymerizing a conjugated diene monomer, as the main repeating unit.

The conjugated diene monomer used to constitute the conjugated diene monomer unit in the conjugated diene polymer block is not particularly limited as long as it is a conjugated diene compound, and examples thereof include the same conjugated diene monomers as those listed in the conjugated diene polymer block (D^{a}) described above.

Further, the conjugated diene polymer block may contain a different monomer unit as long as the conjugated diene monomer unit is the main repeating unit, and examples of monomers constituting different monomer units other than the conjugated diene monomer unit include the same monomers as those listed in the conjugated diene polymer block (D^{a}) described above, and the content thereof and the vinyl bond content may be the same as described above. The conjugated diene polymer block is also preferably composed substantially only of one or two or more types of conjugated diene monomer units, and particularly preferably composed of only isoprene units.

Preferably, the vinyl bond content of the conjugated diene polymer block is substantially equal to that of the conjugated diene polymer block (D^{c}) of the block copolymer C.

The weight average molecular weight of the conjugated diene polymer block is preferably 20,000 to 200,000, more preferably 25,000 to 180,000, still more preferably 30,000 to 150,000, further still more preferably 70,000 to 130,000.

Preferably, the weight average molecular weight of the conjugated diene polymer block is substantially equal to that of the conjugated diene polymer block in the block copolymer C.

The weight average molecular weight of the block copolymer D (i.e., the weight average molecular weight of the entire block copolymer D) is preferably 30,000 to 200,000, more preferably 40,000 to 180,000, still more preferably 70,000 to 150,000.

Although not particularly limited, the content of the aromatic vinyl monomer unit of the block copolymer D is preferably less than 50% by weight, preferably less than 40% by weight, more preferably less than 30% by weight, still more preferably less than 20% by weight, most preferably less than 16% by weight relative to the total monomer units constituting the block copolymer D. The lower limit can be 5% by weight or more, although not particularly limited thereto.

For the proportion of the content of the block copolymer C and that of the block copolymer D in the aromatic vinyl-conjugated diene copolymer composition used in the present invention, it is preferred that the content of the block copolymer C be 25 to 98% by weight and that of the block copolymer D be 2 to 75% by weight, it is more preferred that the content of the block copolymer C be 75 to 95% by weight and that of the block copolymer D be 5 to 25% by weight, it is still more preferred that the content of the block copolymer C be 80 to 92% by weight and that of the block copolymer D be 8 to 20% by weight, it is further still more preferred that the content of the block copolymer C be 84 to 92% by weight and that of the block copolymer D be 8 to 16% by weight.

The block copolymer C and the block copolymer D can each be produced by a conventional method, and examples of the most general production method include a method of sequentially polymerizing an aromatic vinyl monomer and a conjugated diene monomer by living anionic polymerization to form polymer blocks, and optionally reacting these polymer blocks with a coupling agent to perform coupling. Alternatively, a method of sequentially polymerizing an aromatic vinyl monomer, a conjugated diene monomer, and then an aromatic vinyl monomer in this order to form polymer blocks may be used. Alternatively, these block copolymers can each be produced by separately producing polymers by a conventional polymerization method, compounding other polymer components and the like as needed, and mixing these by a conventional method such as kneading or solution mixing. Alternatively, as described later, the block copolymers C and D can also be produced at the same time.

Alternatively, in the present invention, a commercially available block copolymer can also be used, and "Quintac (registered trademark)" (available from ZEON Corporation), "JSR Corporation-SIS (registered trademark)" (available from JSR Corporation), "Vector (registered trademark)" (available from DEXCO Polymers L.P.), "Asaprene (registered trademark)", "Tufprene (registered trademark)", "Tuftec (registered trademark)" (available from Asahi Kasei Chemicals Corporation), "Septon (registered trademark)" (available from Kuraray Co., Ltd.), "Kraton (registered trademark)" (available from Kraton Corporation), and the like can be used, for example.

Preferably, the block copolymer C is produced by a method of polymerizing the aromatic vinyl monomer and the conjugated diene monomer to form diblock chains, and reacting the diblock chains with a coupling agent to perform coupling.

More specifically, the block copolymer C and the block copolymer D are preferably produced by the following production. In other words, preferred is a method comprising:
a first polymerization step of obtaining a solution containing aromatic vinyl polymer block chains by polymerizing monomers containing an aromatic vinyl monomer in a solvent in the presence of a polymerization initiator;
a second polymerization step of obtaining a solution containing diblock chains by adding monomers containing a conjugated diene monomer to the solution containing aromatic vinyl polymer block chains, and performing polymerization; and
a reaction step of adding a coupling agent to the solution containing diblock chains in an amount of preferably 0.05 to 1.0 molar equivalents relative to the active terminals of the diblock chains to obtain the block copolymer C and the block copolymer D.

In the above production method, first, monomers containing an aromatic vinyl monomer as the main component are polymerized in a solvent in the presence of a polymerization initiator (first polymerization step). The solvent used in the first polymerization step and the amount thereof used, and the polymerization initiator and the amount thereof used may be the same as those in the first polymerization step in the above-described preferred method of producing the block copolymer A and the block copolymer B. In addition, a Lewis base compound may be added in the same manner as in the first polymerization step in the above-described preferred method of producing the block copolymer A and the block copolymer B. Further, the same polymerization reaction temperature, polymerization time, and polymerization pressure as those of the first polymerization step in the above-described preferred method of producing the block copolymer A and the block copolymer B may be employed.

Under the above conditions, a solution containing aromatic vinyl polymer block chains can be obtained by polymerizing the monomers containing an aromatic vinyl monomer as the main component in the solvent using the polymerization initiator. Note that the aromatic vinyl polymer block chains obtained by polymerization usually have an active terminal. The obtained aromatic vinyl polymer block chains will form the aromatic vinyl polymer block (Ar^{c}). Thus, the amounts of the monomers used in the first polymerization step may be determined according to the weight average molecular weight of the aromatic vinyl polymer block (Ar^{c}) .

In the next step, monomers containing a conjugated diene monomer as the main component are added to the solution containing aromatic vinyl polymer block chains prepared in the first polymerization step, and polymerization is performed (second polymerization step). Thereby, a solution containing diblock chains can be prepared. The diblock chains produced through polymerization usually have an active terminal. In the diblock chains obtained through the second polymerization step, the polymer chain produced through the first polymerization step which will form the aromatic vinyl polymer block (Ar^{c}) is further bonded to the polymer chain which will form the conjugated diene polymer block (D^{c}). For this reason, the amounts of the monomers used in the second polymerization step may be determined according to the weight average molecular weight of the conjugated diene polymer block (D^{c}). The temperature for the polymerization reaction, the polymerization time, and the polymerization pressure may be controlled within the same ranges as those in the first polymerization step.

Then, a coupling agent is added to the solution containing diblock chains (reaction step). Thereby, the active terminals of the diblock chains are reacted with the coupling agent, and two or more diblock chains are bonded via a residue of the coupling agent to form the block copolymer C.

The coupling agent is particularly limited as long as it is a coupling agent having two or more functional groups reactive with the active terminal of the diblock chain in one molecule. Preferred are coupling agents having 2 to 8 functional groups reactive with the active terminal of the diblock chain in one molecule, and more preferred are those having 2 to 4 functional groups reactive with the active terminal of the diblock chain in one molecule. The coupling agent preferably contains a silicon atom. Halogenated silanes and alkoxysilanes are more preferred.

Examples of usable coupling agents having two functional groups reactive with the active terminal of the diblock chain in one molecule (bifunctional coupling agents) include bifunctional halogenated silanes such as dichlorosilane, monomethyldichlorosilane, and dimethyldichlorosilane; bifunctional alkoxysilanes such as diphenyldimethoxysilane and diphenyldiethoxysilane; bifunctional halogenated alkanes such as dichloroethane, dibromoethane, methylene chloride, and dibromomethane; bifunctional tin halides such as dichlorotin, monomethyldichlorotin, dimethyldichlorotin, monoethyldichlorotin, diethyldichlorotin, monobutyldichlorotin, and dibutyldichlorotin; dibromobenzene, benzoic acid, CO, 2-chloropropene, and the like. Among these, bifunctional halogenated silanes or bifunctional alkoxysilanes are particularly preferably used. These bifunctional coupling agents may be used alone or in combination.

Examples of coupling agents having three functional groups reactive with the active terminal of the diblock chain in one molecule (trifunctional coupling agents) include trifunctional halogenated alkanes such as trichloroethane and trichloropropane; trifunctional halogenated silanes such as methyltrichlorosilane and ethyltrichlorosilane; trifunctional alkoxysilanes such as methyltrimethoxysilane, phenyltrimethoxysilane, and phenyltriethoxysilane; and the like. These trifunctional coupling agents may be used alone or in combination.

Examples of coupling agents having four functional groups reactive with the active terminal of the diblock chain in one molecule (tetrafunctional coupling agents) include tetrafunctional halogenated alkanes such as carbon tetrachloride, carbon tetrabromide, and tetrachloroethane; tetrafunctional halogenated silanes such as tetrachlorosilane and tetrabromosilane; tetrafunctional alkoxysilanes such as tetramethoxysilane and tetraethoxysilane; tetrafunctional tin halides such as tetrachlorotin and tetrabromotin; and the like. These tetrafunctional coupling agents may be used alone or in combination.

The number of "n" of the block copolymer C, i.e., the number of branches of the block copolymer C can be controlled by adjusting the type of the coupling agent, the amount thereof used, the timing of the addition thereof, the amount of the Lewis base compound used, and the like. Alternatively, the number of branches of the block copolymer C can be controlled using a reaction terminator such as methanol to adjust the coupling ratio. Alternatively, the number of branches of the block copolymer C can be controlled by using a combination of two or more coupling agents having different numbers of functional groups reactive with the active terminal of the diblock chain in one molecule. Further, by these methods, the diblock chains produced in the second polymerization step can be left unreacted, and can be finally recovered as the block copolymer D.

The amount of the coupling agent used is appropriately adjusted according to the number of branches of the target block copolymer C. The amount of the coupling agent used is preferably 0.25 to 1.00 molar equivalents, more preferably 0.40 to 1.0 molar equivalents relative to the active terminals of the diblock chains.

The reaction temperature is preferably 10 to 150°C, more preferably 30 to 130°C, still more preferably 40 to 90°C. The time required for the reaction varies depending on the conditions, but is usually within 48 hours, preferably 0.5 to 10 hours.

After the reaction step, the polymer component may be recovered from the solution containing the block copolymer C and the block copolymer D (recovery step). The method of recovery may be according to a conventional method, and is not particularly limited. For example, after completion of the reaction, if necessary, a polymerization terminator such as water, methanol, ethanol, propanol, hydrochloric acid, or citric acid is added, and if necessary, an additive such as an antioxidant is further added, and then a known method such as drying or steam stripping is directly applied to the solution to be recovered. When the polymer component is recovered as a slurry by applying steam stripping or the like, the polymer component may be dehydrated using any dehydrator such as an extruder type squeezer to obtain crumbs having a moisture content of a predetermined value or less, and the crumbs may be dried using any dryer such as a band dryer or an expansion extrusion dryer. The block copolymer obtained as described above may be processed into a pellet shape or the like according to a conventional method and then used.

Thus, the block copolymer C and the block copolymer D can be produced.

### <Hydrocarbon compound group>

The masterbatch composition according to the present invention comprises the aromatic vinyl polymer, and a hydrocarbon compound group containing a plurality of hydrocarbon compounds having different numbers of carbon atoms in the range of 12 or more and 60 or less carbon atoms in specific amounts.

The hydrocarbon compound group used in the present invention comprises a plurality of hydrocarbon compounds having different numbers of carbon atoms within the range of 12 or more and 60 or less carbon atoms, that is, a mixture of a plurality of hydrocarbon compounds having different numbers of carbon atoms, and when the hydrocarbon compound group is measured by gas chromatography mass spectrometry (GC-MS) to determine ratios of detected areas of the hydrocarbon compound components having different numbers to the total peak area of the components having carbon atoms in the range of 12 or more and 60 or less carbon atoms where the total peak area of components having 12 or more and 60 or less carbon atoms is regarded as 100%, the total peak areas of the components having different numbers of carbon atoms are within the ranges below. The total peak area refers to the mass-based proportion of the components.

Specifically, the total peak area of components having 24 or more and 27 or less carbon atoms is 5% or more,
the total peak area of components having 27 or more and 30 or less carbon atoms is 5% or more,
the total peak area of components having 30 or more and 33 or less carbon atoms is 5% or more,
the total peak area of components having 33 or more and 36 or less carbon atoms is 5% or more, and
the total peak area of components having 12 or more and 27 or less carbon atoms is 45% or less.

In the present invention, by use of such a hydrocarbon compound group, the masterbatch composition according to the present invention can have high compatibility with the aromatic vinyl block copolymer, can achieve excellent film molding properties when compounded with the aromatic vinyl block copolymer (e.g., can effectively prevent breakage of films or occurrence of a bad appearance when films are formed), and can ensure high ozone crack resistance in a wide temperature region.

The total peak areas of the components having different numbers of carbon atoms are preferably within the ranges below.

Specifically, the total peak area of components having 24 or more and 27 or less carbon atoms is preferably 8 to 40%, more preferably 10 to 36%, still more preferably 12 to 32%, further still more preferably 12 to 31%.

The total peak area of components having 27 or more and 30 or less carbon atoms is preferably 8 to 50%, more preferably 10 to 45%, still more preferably 12 to 40%, further still more preferably 15 to 39%.

The total peak area of components having 30 or more and 33 or less carbon atoms is preferably 10 to 45%, more preferably 12 to 40%, still more preferably 15 to 35%, further still more preferably 17 to 31%.

The total peak area of components having 33 or more and 36 or less carbon atoms is preferably 7 to 30%, more preferably 9 to 28%, still more preferably 10 to 25%, further still more preferably 11 to 24%.

Furthermore, the total peak area of components having 12 or more and 27 or less carbon atoms is preferably 10 to 40%, more preferably 11 to 38%, still more preferably 12 to 32%, further still more preferably 14 to 24%.

When the total peak area of the components having 24 or more and 27 or less carbon atoms and the total peak area of the components having 27 or more and 30 or less carbon atoms are excessively small, ozone crack resistance when such a hydrocarbon compound group is compounded with the aromatic vinyl block copolymer, particularly, ozone crack resistance in a low temperature region is reduced. When the total peak area of the components having 30 or more and 33 or less carbon atom and the total peak area of the components having 33 or more and 36 or less carbon atoms are excessively small, ozone crack resistance when such a hydrocarbon compound group is compounded with the aromatic vinyl block copolymer, particularly, ozone crack resistance in a high temperature region is reduced. When the total peak area of the components having 12 or more and 27 or less carbon atoms is excessively large, a hydrocarbon compound derived from the hydrocarbon compound group adheres to and is accumulated on a cooling body such as a cooling roll with elapsed time in compounding with the aromatic vinyl block copolymer and formation of film-shaped molded bodies, and is transferred onto the molded bodies. These cause a bad appearance, and reduce heat removal efficiency with a cooling body such as a cooling roll, thus reducing production stability.

The hydrocarbon compound group used in the present invention refers to a group of compounds consisting substantially only of carbon and hydrogen. Therefore, compounds further having a polar group or a metal element in addition to the hydrocarbon skeleton (such as fatty acid amide or fatty acid metallic salt used as a lubricant) are excluded. It is sufficient that in the hydrocarbon compound group used in the present invention, the total peak areas of the components having different numbers of carbon atoms fall within the above ranges when the total peak area of the components consisting substantially only of carbon and hydrogen and having 12 or more and 60 or less carbon atoms is regarded as 100%. Although the hydrocarbon compound group may contain a hydrocarbon compound having 11 or less carbon atoms and/or a hydrocarbon compound having 61 or more carbon atoms, preferably, the hydrocarbon compound group is composed substantially only of hydrocarbon compounds having carbon atoms in the range of 12 or more and 60 or less carbon atoms (for example, the hydrocarbon compound group preferably contains 99% by weight or more of the hydrocarbon compounds having carbon atoms in the range of 12 or more and 60 or less carbon atoms).

The hydrocarbon compound group used in the present invention may be a commercially available wax as long as the total peak areas of the components having different numbers of carbon atoms fall within the above ranges, or may be a mixture of commercially available waxes such that the total peak areas of the components having different numbers of carbon atoms fall within the above ranges.

For the proportion of the content of the aromatic vinyl polymer and that of the hydrocarbon compound group in the masterbatch composition according to the present invention, the content of the aromatic vinyl polymer is 30 to 98% by weight and that of the hydrocarbon compound group is 2 to 70% by weight, it is preferred that the content of the aromatic vinyl polymer be 50 to 95% by weight and that of the hydrocarbon compound group be 5 to 50% by weight, and it is more preferred that the content of the aromatic vinyl polymer be 60 to 90% by weight and that of the hydrocarbon compound group be 10 to 40% by weight.

As described later, the masterbatch composition according to the present invention is compounded with the aromatic vinyl-conjugated diene copolymer and the like to prepare an aromatic vinyl block copolymer composition, which is finally used in formation of a film-shaped molded body or the like. The content of the hydrocarbon compound group in such a film-shaped molded body or the like can be controlled as needed by the content of the hydrocarbon compound group in the masterbatch composition and the amount of the masterbatch composition added in production of the film-shaped molded body. Preferably, the amount of the masterbatch composition compounded with the film-shaped molded body or the like is controlled such that the content of the hydrocarbon compound group in the film-shaped molded body is 0.1 to 10% by weight, preferably 0.2 to 5% by weight, still more preferably 0.3 to 3% by weight, further still more preferably 0.8 to 2.5% by weight.

If the content of the aromatic vinyl polymer in the masterbatch composition is excessively small and such a masterbatch composition is compounded with the aromatic vinyl-conjugated diene copolymer and the like, as described later, the compatibility of the masterbatch composition with the aromatic vinyl-conjugated diene copolymer is reduced, which causes a bad appearance of the film or breakage of the film due to insufficient kneading. Moreover, it is difficult to obtain a masterbatch product due to insufficient kneading or transportation failures during production of the masterbatch. The obtained product cannot maintain its shape such as that of pellets, and is difficult to handle.

If the content of the aromatic vinyl polymer in the masterbatch composition is excessively large and such a masterbatch composition is compounded with the aromatic vinyl-conjugated diene copolymer and the like, as described later, a large amount of the masterbatch composition is needed in production of a film-shaped molded body, and the film-shaped molded body cannot be obtained with high productivity. Since the aromatic vinyl polymer used in the masterbatch composition is processed two times in total, an increase in amount of the masterbatch composition compounded results in an increase in thermal history of the entire film-shaped molded bod, causing a reduction in quality.

Moreover, in addition to the aromatic vinyl polymer and the hydrocarbon compound group, the masterbatch composition according to the present invention may further contain fatty acid amide, an antioxidant, a tackifying resin, a softening agent, an antibacterial agent, a photostabilizer, an ultraviolet absorbing agent, a dye (pigment), a lubricant, and the like as needed.

The method of preparing the masterbatch composition according to the present invention is not particularly limited, and the masterbatch composition can be prepared by mixing the above-mentioned aromatic vinyl polymer, the above-mentioned hydrocarbon compound group, and the optional components added as needed. Examples thereof include a method of dissolving the components in a solvent, homogeneously mixing these, and then removing the solvent by heating or the like; a method of melt mixing the components with a single screw extruder, a twin screw extruder, a kneader, or a Banbury mixer; or the like. Among these methods, melt mixing is suitable and use of a twin screw extruder or a Banbury mixer is particularly preferred because of more efficient mixing. The temperature during melt mixing is not particularly limited, but is usually in the range of 100 to 230°C.

A preferred method of recovering the masterbatch composition is pelletization, and a strand cut pelletizer, a hot cut pelletizer, and an underwater cut pelletizer can be used. In particular, a hot cut pelletizer and an underwater cut pelletizer can be suitably used.

An external additive for preventing adhesion of pellets may or may not be applied to pellets. When such an external additive is externally added, silica, talc, polyethylene wax, polypropylene wax, magnesium stearate, calcium stearate, fatty acid amide, or the like can be used. The amount thereof externally added is usually in the range of 0.05 to 1.00 phr.

### <Aromatic vinyl block copolymer composition>

The aromatic vinyl-conjugated diene copolymer composition according to the present invention comprises an aromatic vinyl-conjugated diene copolymer and the above-mentioned masterbatch composition according to the present invention, the aromatic vinyl-conjugated diene copolymer containing at least one aromatic vinyl polymer block and at least one conjugated diene polymer block.

In the present invention, when the above-mentioned hydrocarbon compound group where the total peak areas of the components having different numbers of carbon atoms fall within the above ranges is compounded with the aromatic vinyl polymer to prepare a masterbatch and the masterbatch is compounded with an aromatic vinyl-conjugated diene copolymer as a base resin, high compatibility can be achieved, and thus, an aromatic vinyl-conjugated diene copolymer composition to be obtained can have excellent film molding properties (e.g., breakage of films or occurrence of a bad appearance can be effectively prevented when films are formed), and can ensure excellent ozone crack resistance in a wide temperature region.

Although the aromatic vinyl-conjugated diene copolymer is not particularly limited and it is sufficient that it contains at least one aromatic vinyl polymer block and at least one conjugated diene polymer block, the following aromatic vinyl-conjugated diene copolymer composition can be suitably used in the present invention.

Specifically, suitable examples thereof include an aromatic vinyl-conjugated diene copolymer composition comprising:
a block copolymer A represented by general formula (A): Ar1^{a}-D^{a}-Ar2^{a},
a block copolymer B represented by general formula (B): Ar1^{b}-Db-Ar2^{b},
a block copolymer C represented by general formula (C): (Ar^{c}-D^{c})ₙ-_{X}, and
a block copolymer D represented by general formula (D): Ar^{d}-D^{d}.

Its preferred embodiment or the like can be the same as the aromatic vinyl-conjugated diene copolymer composition suitably used in the above-mentioned masterbatch composition. As in the case of the masterbatch composition, the aromatic vinyl-conjugated diene copolymer composition can be prepared by preparing a mixture of the block copolymer A and the block copolymer B and a mixture of the block copolymer C and the block copolymer D, and mixing these.

The weight ratio of the block copolymers A to D (A/B/C/D) is preferably 10 to 30/20 to 40/12.5 to 49/1 to 37.5, more preferably 15 to 27.5/22.5 to 35/37.5 to 47.5/2.5 to 12.5, still more preferably 17.5 to 25/25 to 32.5/40 to 46/4 to 10, further still more preferably 18 to 22/28 to 32/42 to 46/4 to 18.

Although the proportion of the content of the aromatic vinyl-conjugated diene copolymer and that of the masterbatch composition in the aromatic vinyl-conjugated diene copolymer composition according to the present invention is not particularly limited, it is preferred that the content of the aromatic vinyl-conjugated diene copolymer be 60 to 99% by weight and the content of the masterbatch composition be 1 to 40% by weight, it is more preferred that the content of the aromatic vinyl-conjugated diene copolymer be 80 to 98% by weight and the content of the masterbatch composition be 2 to 20% by weight, it is still more preferred that the content of the aromatic vinyl-conjugated diene copolymer be 88 to 97% by weight and the content of the masterbatch composition be 3 to 120 by weight, and it is further still more preferably that the content of the aromatic vinyl-conjugated diene copolymer be 92 to 96% by weight and the content of the masterbatch composition be 4 to 8% by weight. When the proportion falls within the above ranges, the effects of the present invention can be more appropriately enhanced.

The aromatic vinyl-conjugated diene copolymer composition according to the present invention may further contain a lubricant, an antioxidant, a tackifying resin, a softening agent, an antibacterial agent, a photostabilizer, an ultraviolet absorbing agent, a dye (pigment), and the like as needed.

Examples of lubricants include synthetic PE-WAX, oxidized PE-WAX, PP WAX, magnesium stearate, calcium stearate, fatty acid amides (amide), and the like.

The fatty acid amides may be aliphatic monoamides, or may be aliphatic bisamides. The aliphatic monoamides are not particularly limited as long as they are a compound obtained by bonding a hydrocarbon group and one amide group (-NHCO), but monoamides of higher saturated fatty acids having 12 or more carbon atoms (i.e., compounds obtained by bonding a linear alkyl group having 12 or more carbon atoms and one amide group (-NHCO)) are preferably used.

Specific examples of fatty acid monoamides include saturated fatty acid monoamides such as lauric amide, myristic amide, palmitic amide, stearic amide, behenic amide, and hydroxystearic amide; unsaturated fatty acid monoamides such as oleamide and erucamide; and the like.

The antioxidant is not particularly limited, and examples of usable antioxidants include hindered phenol compounds such as pentaerythritol tetrakis[3-(3,5-di-t-butyl-4-hydroxyphenyl)propionate], octadecyl-3-(3,5-di-t-butyl-4-hydroxyphenyl)propionate, 2,6-di-t-butyl-p-cresol, di-t-butyl-4-methylphenol, 4-[[4,6-bis(octylthio)-1,3,5-triazin-2-yl]amino]-2,6-di-tert-butylphenol, 2,4-bis[(dodecylthio)methyl]-6-methylphenol, and 4,6-bis(octylmethyl)-o-cresol; thiodicarboxylate esters such as dilauryl thiopropionate; and phosphorous acid salts such as tris (nonylphenyl)phosphite and butylidene bis(3-methyl-6-t-butylphenyl-ditridecyl phosphite.

The ultraviolet absorbing agent is not particularly limited, and compounds such as triazine compounds, benzoate compounds, benzophenone compounds, and benzotriazole compounds can be used. These can also be used in combination. Among these, triazine compounds and benzotriazole compounds are suitable. Specifically, 2-(2-hydroxy-5-tert-octylphenyl)benzotriazole, 2-[2-hydroxy-3,5-bis(α,α-dimethylbenzyl)phenyl]-2H-benzotriazole, 2,2'-methylenebis[4-(1,1,3,3-tetramethylbutyl)-6-(2H-benzotriazol-2-yl)phenol], 2-[4,6-bis(1,1'-biphenyl-4-yl)-1,3,5-triazin-2-yl]-5-[(2-ethylhexyl)oxy]phenol, and the like can be used.

The photostabilizer is not particularly limited, and hindered amine photostabilizers can be used, for example. Examples thereof include tetrakis(1,2,2,6,6-pentamethyl-4-piperidinyl) 1,2,3,4-butanetetracarboxylate, tetrakis(2,2,6,6-tetramethyl-4-piperidyl)=butane-1,2,3,4-tetracarboxylate, mixed esterified products of 1,2,3,4-butane tetracarboxylic acid with 1,2,2,6,6-pentamethyl-4-piperidinol and 3,9-bis(2-hydroxy-1,1-dimethylethyl)-2,4,8,10-tetraoxaspiro[5.5]undecane, mixed esterified products of 1,2,3,4-butanetetracarboxylic acid with 2,2,6,6-tetramethyl-4-piperidinol and 3,9-bis(2-hydroxy-1,1-dimethylethyl)-2,4,8,10-tetraoxaspiro[5.5]undecane, bis(1,2,2,6,6-pentamethyl-4-piperidyl)=decanedioate, and the like.

These photostabilizers can be used in combination with the ultraviolet absorbing agent.

The aromatic vinyl-conjugated diene copolymer composition according to the present invention can be prepared by mixing the aromatic vinyl-conjugated diene copolymer, the masterbatch composition, and other components used as needed. Examples of the method include a method of dissolving the components in a solvent, mixing these homogeneously, and removing the solvent by heating or the like, and a method of melt mixing the components with a kneader or the like. Among these methods, melt mixing is suitable from the viewpoint of more efficient mixing. In particular, melt mixing with a twin screw extruder, a single screw extruder, a kneader, or a Banbury mixer is preferred. The temperature for melt mixing is usually in the range of 100 to 230°C, although not particularly limited thereto.

The aromatic vinyl-conjugated diene copolymer composition according to the present invention can be used, for example, in films, yarns (elastic strands), gloves, elastic bands, condoms, OA equipment, rolls for office equipment, packaging films and sheets, forming materials used for vibration-proof sheets for electrical and electronic equipment, vibration-proof rubbers, shock absorbing sheets, shock cushioning films or sheets, residential vibration-proof sheets, vibration-damper materials, and the like, adhesive applications used for adhesive tapes, adhesive sheets, adhesive labels, various removing rollers, and the like, adhesive applications used for hygienic products and bookbinding, and elastic fiber applications used for clothing, sports products, and the like.

The aromatic vinyl-conjugated diene copolymer composition according to the present invention can be suitably used in films, and particularly ensures excellent ozone crack resistance in a wide temperature region. Utilizing such properties, the aromatic vinyl-conjugated diene copolymer composition according to the present invention can be suitably used in stretchable films for hygienic products, such as paper diapers, shorts type napkins, and masks, (film-shaped stretching members for hygienic materials). The aromatic vinyl-conjugated diene copolymer composition according to the present invention may be also used in stretchable yarns for hygienic products.

### EXAMPLES

Hereinafter, the present invention will be more specifically described by way of Examples and Comparative Examples, but the present invention will not be limited only to these Examples. The term "parts" is weight-based unless otherwise specified.

Tests were performed in Examples and Comparative Examples by the following methods.

### [Weight average molecular weights of block copolymers]

The weight average molecular weight was determined as a molecular weight in terms of polystyrene by high performance liquid chromatography using tetrahydrofuran having a flow rate of 0.35 ml/min as a carrier. The apparatus used was a HLC8320 available from Tosoh, three columns connected were Shodex KF-404HQ available from Showa Denko K.K. (column temperature: 40°C), and a differential refractometer and an ultraviolet detector were used as detectors. The molecular weight was calibrated at 12 points of standard polystyrenes (500 to 3 million) available from Tosoh.

### [Weight ratio of block copolymers in block copolymer composition]

The weight ratio of block copolymers was determined from the area ratios of the peaks corresponding to the block copolymers in the chart obtained by high performance liquid chromatography described above.

### [Weight average molecular weight of styrene polymer block of each block copolymer]

According to the process described in Rubber Chem. Technol., 45, 1295 (1972), the block copolymer was reacted with ozone and reduced with lithium aluminum hydride to decompose the isoprene polymer block of the block copolymer. Specifically, the following procedure was performed. That is, 300 mg of a sample was dissolved in a reaction vessel containing 100 ml of dichloromethane treated with molecular sieves. This reaction vessel was placed into a cooling tank, and cooled to -25°C, and ozone generated by an ozone generator was introduced while oxygen was being flowed into the reaction vessel at a flow rate of 170 ml/min. After 30 minutes from the start of the reaction, it was confirmed that the reaction was completed, by introducing the gas flowing out of the reaction vessel into an aqueous potassium iodide solution. Then, 50 ml of diethyl ether and 470 mg of lithium aluminum hydride were charged into another reaction vessel subjected to nitrogen substitution, and the solution reacted with ozone was slowly added dropwise to this reaction vessel while the reaction vessel was being cooled with ice water. Then, the reaction vessel was placed in a water bath, and the temperature was gradually increased to reflux at 40°C for 30 minutes. Thereafter, while the solution was being stirred, dilute hydrochloric acid was added dropwise in small portions to the reaction vessel, and the addition was continued until the generation of hydrogen was hardly recognized. After this reaction, the solid product formed in the solution was filtered off, and the solid product was extracted with 100 ml of diethyl ether for 10 minutes. The extract was combined with the filtrate after filtration, and the solvent was distilled off to obtain a solid sample. The sample thus obtained was measured for weight average molecular weight according to the method of measuring the weight average molecular weight described above, and the value thereof was defined as the weight average molecular weight of the styrene polymer block.

### [Weight average molecular weight of isoprene polymer block of each block copolymer]

From the weight average molecular weight of each block copolymer determined as described above, the weight average molecular weight of the corresponding styrene polymer block was subtracted, and the weight average molecular weight of the isoprene polymer block was determined based on the calculated value.

### [Styrene unit content of each block copolymer]

It was determined based on the detection intensity ratio between the differential refractometer and the ultraviolet detector in the measurement of the high performance liquid chromatography. Note that, in advance, copolymers having different styrene unit contents were prepared, and using them, a calibration curve was prepared.

### [Total peak areas of components in hydrocarbon wax]

A hydrocarbon wax was subjected to gas chromatography mass spectrometry (GC-MS) using a capillary gas chromatograph-mass spectrometer and a capillary column coated with aluminum as a column under a condition where the carrier gas was helium, the flow rate was 4 ml/min, the column temperature was 180 to 390°C, and the heating rate was 15°C/min. Thereby, the total peak areas of the components below when the total peak area of the components having carbon atoms in the range of 12 or more and 60 or less carbon atoms was regarded as 100% were determined.
· total peak area of the components having 22 or more and 23 or less carbon atoms
· total peak area of the components having 24 or more and 27 or less carbon atoms
· total peak area of the components having 27 or more and 30 or less carbon atoms
· total peak area of the components having 30 or more and 33 or less carbon atoms
· total peak area of the components having 33 or more and 36 or less carbon atoms
· total peak area of the components having 12 or more and 27 or less carbon atoms
· total peak area of the components having 37 or more and 60 or less carbon atoms

The hydrocarbon waxes 1 to 7 used in Examples and Comparative Examples were all hydrocarbon compounds having carbon atoms in the range of 12 or more and 60 or less carbon atoms, and were composed substantially only of carbon atoms and hydrogen atoms.

### [Breakage of film during formation]

Using aromatic vinyl block copolymer compositions, film molded bodies were continuously produced for 15 minutes by the method in Examples and Comparative Examples described later. During the production, it was confirmed whether film molded bodies were broken or not, and evaluation was performed according to the following criteria:
o: There is no breakage of the film molded body.
×: The film molded body is broken.

### [Amount of elapsed-time adhesion onto cooling roll]

Using aromatic vinyl block copolymer compositions, film molded bodies were continuously produced for 60 minutes by the method in Examples and Comparative Examples described later. During the production, the amount of a substance adhering onto a cooling roll was examined, and was evaluated according to the following criteria:
∘: Amount of adhesion ≤ 0.5 g/m²
×: Amount of adhesion > 0.5 g/m²

### [Ozone crack resistance of film (10°C, 23°C, 40°C)]

A film formed from an aromatic vinyl block copolymer composition was set on a tension holder having a distance between chucks of 4.0 cm. Next, the distance between the chucks was extended to 5.0 cm, and the film was fixed while it was stretched by 25%. The film in this state was left to stand under a predetermined temperature environment for 24 hours or longer. Next, the fixed film was left to stand in a thermostat at 50 %RH in an ozone concentration of 5 pphm, and the time until crack was visually confirmed was measured, and was evaluated according to the following criteria. The measurement was performed at 10°C, 23°C, and 40°C.
∘: No crack occurs after more than 2 hours has passed.
×: Crack occurs within 2 hours.

### [Production Example 1]

23.3 Kg of cyclohexane, 1.4 mmol of N,N,N',N'-tetramethylethylenediamine (hereinafter, referred to as "TMEDA"), and 1.04 kg of styrene were added to a pressure-resistant reactor. While the mixture was being stirred at 40°C, 92.9 mmol of n-butyllithium was added, and the mixture was polymerized for 1 hour while the temperature was being raised to 50°C. The polymerization conversion ratio of styrene was 100% by weight. Subsequently, 5.66 kg of isoprene was continuously added to the reactor over 1 hour while the temperature was being controlled to keep the temperature between 50 and 60°C. After completing the addition of isoprene, polymerization was further performed for 1 hour. The polymerization conversion ratio of isoprene was 100%. Next, 1.04 kg of styrene was continuously added over 1 hour while the temperature was being controlled to keep 50 to 60°C. After completing the addition of styrene, a polymerization reaction was further performed for 1 hour to form triblock chains having an active terminal. The polymerization conversion ratio of styrene was 100%. Then, 63.4 mmol of methanol was added as a polymerization terminator, and mixed to deactivate a portion of the active terminals of the triblock chains having the active terminals, forming a styrene-isoprene-styrene triblock copolymer B1. Thereafter, 0.98 kg of styrene was continuously added over 1 hour while the temperature was further being controlled to keep the temperature between 50 and 60°C. After completing the addition of styrene, a polymerization reaction was further performed for 1 hour to form triblock chains having an active terminal. The polymerization conversion ratio of styrene was 100%. Finally, 63.4 mmol of methanol was added as a polymerization terminator and mixed to deactivate all of the active terminals of the triblock chains, forming a styrene-isoprene-styrene triblock copolymer A1 (the composition is shown in Table 1). A portion of the obtained reaction solution was taken out, and the block copolymer was evaluated according to the above measurement methods. The results are shown in Table 2.

To 100 parts of the reaction solution obtained as described above (containing 30 parts of the polymer component), 0.3 parts of 2,6-di-tert-butyl-p-cresol was added as an antioxidant and mixed, and the mixed solution was added dropwise into hot water heated to 85 to 95°C in small portions to volatilize the solvent, obtaining a precipitate. Then, the precipitate was pulverized, and hot air dried at 85°C. Thereby, a mixture containing the block copolymer A1 and the block copolymer B1 was recovered. Further, the mixture was fed to a single screw extruder, was melted by heating at 170°C, and was formed into pellets using an underwater cut pelletizer. To prevent adhesion of the pellets, 0.2 parts of talc was externally added relative to 100 parts of the pellets.

The weight ratio of the block copolymer A1 to the block copolymer B1 in the mixture (block copolymer A1/block copolymer B1) was 40/60.

### [Table 1]

**Table 1**

| | | Production Example 1 |
|---|---|---|
| Cyclohexane (kg) | | 23.3 |
| TMEDA (mmol) | | 1.4 |
| n-Butyllithium (mmol) | | 92.9 |
| Styrene (kg) | [1st polymerization stage] | 1.04 |
| Isoprene (kg) | [2nd polymerization stage] | 5.66 |
| Styrene (kg) | [3rd polymerization stage] | 1.04 |
| Methanol (mmol) | [After 3rd polymerization stage] | 63.4 |
| Styrene (kg) | [4th polymerization stage] | 0.98 |
| Methanol (mmol) | [After 4th polymerization stage] | 63 |

### [Table 2]

**Table 2**

| | | Production Example 1 |
|---|---|---|
| Block copolymer A1 | | A1 |
| | Weight average molecular weight (×10³) | 173 |
| | Weight average molecular weight (×10³) of Ar1^{a} | 12 |
| | Weight average molecular weight (×10³) of Ar2^{a} | 67 |
| | Vinyl bond content (mol%) of D^{a} | 7 |
| | Weight average molecular weight (×10³) of D^{a} | 96 |
| | Styrene unit content (wt%) | 48 |

| Block copolymer B1 | | B1 |
|---|---|---|
| | Weight average molecular weight (×10³) | 120 |
| | Weight average molecular weight (×10³) of Ar1^{b} | 12 |
| | Weight average molecular weight (×10³) of Ar2^{b} | 12 |
| | Vinyl bond content (mol%) of D^{b} | 7 |
| | Weight average molecular weight (×10³) of D^{b} | 96 |
| | Styrene unit content (wt%) | 27 |
| Weight ratio A1/B1 | | 40/60 |
| Total styrene content | | 35 |

### [Production Example 2]

23.2 Kg of cyclohexane, 1.5 mmol of N,N,N',N'-tetramethylethylenediamine (hereinafter, referred to as "TMEDA"), and 1.20 kg of styrene were added to a pressure-resistant reactor. While the mixture was being stirred at 40°C, 101.7 mmol of n-butyllithium was added, and the mixture was polymerized for 1 hour while the temperature was being raised to 50°C. The polymerization conversion ratio of styrene was 100%. Subsequently, 6.53 kg of isoprene was continuously added to the reactor over 1 hour while the temperature was being controlled to keep the temperature between 50 and 60°C. After completing the addition of isoprene, polymerization was further performed for 1 hour to form diblock chains having an active terminal. The polymerization conversion ratio of isoprene was 100%. Then, as coupling agents, 25.4 mmol of dimethyldichlorosilane and 9.7 mmol of tetramethoxysilane were added to perform a coupling reaction for 2 hours to form a styrene-isoprene coupling block copolymer C1. Thereafter, 203 mmol of methanol was added as a polymerization terminator, and mixed to deactivate all of the active terminals of the diblock chains to form a styrene-isoprene diblock copolymer D1 (the composition is shown in Table 3). A portion of the obtained reaction solution was taken out, and the block copolymer was evaluated according to the above measurement methods. The results are shown in Table 4.

To 100 parts of the reaction solution obtained as described above, 0.3 parts of 2,6-di-tert-butyl-p-cresol as an antioxidant was added and mixed, and the mixed solution was added dropwise into hot water heated to 85 to 95°C in small portions to volatilize the solvent, obtaining a precipitate. Then, the precipitate was pulverized, and hot air dried at 85°C. Thereby, a mixture containing the block copolymer C1 and the block copolymer D1 was recovered. Further, the mixture was fed to a single screw extruder, was melted by heating at 170°C, and was formed into pellets using an underwater cut pelletizer. To prevent adhesion of the pellets, 0.2 parts of talc was externally added relative to 100 parts of the pellets.

The weight ratio of the block copolymer C1 to the block copolymer D1 in the mixture (block copolymer C1/block copolymer D1) was 90/10.

### [Table 3]

**Table 3**

| | | Production Example 2 |
|---|---|---|
| Cyclohexane (kg) | | 23.2 |
| TMEDA(mmol) | | 1.5 |
| n-Butyllithium (mmol) | | 101.7 |
| Styrene (kg) | [1st polymerization stage] | 1.20 |
| Isoprene (kg) | [2nd polymerization stage] | 6.53 |
| Dimethyldichlorosilane (mmol) | [After 2nd polymerization stage] | 25.4 |
| Tetramethoxysilane (mmol) | [After 2nd polymerization stage] | 9.7 |
| Methanol (mmol) | [After 2nd polymerization stage] | 203 |

### [Table 4]

**Table 4**

| | | Production Example 2 |
|---|---|---|
| Block copolymer C1 | | C1 |
| | Proportion (wt%) of those having 2 branches (i.e., n=2) | 56 |
| | Proportion (wt%) of those having 3 branches (i.e., n=3) | 22 |
| | Proportion (wt%) of those having 4 branches (i.e., n=4) | 22 |
| | Weight average molecular weight (×10³) | 250 |
| | Weight average molecular weight (×10³) of Ar^{c} | 9 |
| | Vinyl bond content (mol%) of D^{c} | 7 |
| | Weight average molecular weight (×10³) of D^{c} | 105 |
| | Styrene unit content (wt%) | 14 |

| Block copolymer D1 | | D1 |
|---|---|---|
| | Weight average molecular weight (×10³) | 112 |
| | Weight average molecular weight (×10³) of Ar^{d} | 9 |
| | Vinyl bond content (mol%) of D^{d} | 7 |
| | Weight average molecular weight (×10³) of D^{d} | 105 |
| | Styrene unit content (wt%) | 14 |
| Weight ratio C1/D1 | | 90/10 |
| Total styrene content | | 14 |

### [Production Example 3]

23.3 Kg of cyclohexane, 3.6 mmol of N,N,N',N'-tetramethylethylenediamine (hereinafter, referred to as "TMEDA"), and 1.50 kg of styrene were added to a pressure-resistant reactor. Under stirring at 40°C, 120.5 mmol of n-butyllithium was added, and the mixture was polymerized for 1 hour while the temperature was being raised to 50°C. The polymerization conversion ratio of styrene was 100%. Subsequently, 7.00 kg of isoprene was continuously added to the reactor over 1 hour while the temperature was being controlled to keep the temperature between 50 and 60°C. After completing the addition of isoprene, polymerization was further performed for 1 hour. The polymerization conversion ratio of isoprene was 100%. Then, 1.50 kg of styrene was continuously added over 1 hour while the temperature was being controlled to keep the temperature between 50 and 60°C. After completing the addition of styrene, a polymerization reaction was further performed for 1 hour to form triblock chains having an active terminal. The polymerization conversion ratio of styrene was 100%. Then, 241 mmol of methanol was added as a polymerization terminator and mixed to deactivate all the active terminals of the triblock chains having active terminals, forming a styrene-isoprene-styrene triblock copolymer B2 (the composition is shown in Table 5). A portion of the obtained reaction solution was taken out, and the block copolymer was evaluated according to the above measurement methods. The results are shown in Table 6.

To 100 parts of the reaction solution obtained as described above (containing 30 parts of the polymer component), 0.3 parts of 2,6-di-tert-butyl-p-cresol was added as an antioxidant and mixed, and the mixed solution was added dropwise into hot water heated to 85 to 95°C in small portions to volatilize the solvent, obtaining a precipitate. Then, the precipitate was pulverized, and hot air dried at 85°C. Thereby, a mixture containing a block copolymer B2 was recovered. Further, the mixture was fed to a single screw extruder, was melted by heating at 170°C, and was formed into pellets using an underwater cut pelletizer. To prevent adhesion of the pellets, 0.2 parts of talc was externally added relative to 100 parts of the pellets.

### [Table 5]

**Table 5**

| | | Production Example 3 |
|---|---|---|
| Cyclohexane (kg) | | 23.3 |
| TMEDA (mmol) | | 3.6 |
| n-Butyllithium (mmol) | | 120.5 |
| Styrene (kg) | [1st polymerization stage] | 1.50 |
| Isoprene (kg) | [2nd polymerization stage] | 7.00 |
| Styrene (kg) | [3rd polymerization stage] | 1.50 |
| Methanol (mmol) | [After 2nd polymerization stage] | 241 |

### [Table 6]

**Table 6**

| | | Production Example 3 |
|---|---|---|
| Block copolymer B2 | | B2 |
| | Weight average molecular weight (×10³) | 120 |
| | Weight average molecular weight (×10³) of Ar1^{e} | 12 |
| | Weight average molecular weight (×10³) of Ar2^{e} | 12 |
| | Vinyl bond content (mol%) of D^{e} | 7 |
| | Weight average molecular weight (×10³) of D^{e} | 96 |
| | Styrene unit content (wt%) | 30 |

### [Example 1]

### (Preparation of masterbatch composition)

Using a Banbury mixer, 55 parts by weight of the mixture of the block copolymer A1 and the block copolymer B1 obtained in Production Example 1, 40 parts by weight of a hydrocarbon wax 1 (trade name "SUNNOC P", available from Ouchi Shinko Chemical Industrial Co., Ltd.), and 5 parts by weight of an ultraviolet absorbing agent (2-[4,6-bis(1,1'-biphenyl-4-yl)-1,3,5-triazin-2-yl)-5-[(2-ethylhexyl)oxy]phenol) were mixed at 40 to 160°C for 20 minutes to prepare a masterbatch composition. The composition which was molten state was fed as it was to a single screw extruder equipped with a hot cut pelletizer, and was formed into pellets. The hydrocarbon wax 1 was subjected to gas chromatography mass spectrometry (GC-MS), which revealed that the total peak areas of the components were as shown in Table 7.

### (Preparation of aromatic vinyl-conjugated diene copolymer composition)

47.5 Parts by weight of pellets of the mixture of the block copolymer A1 and the block copolymer B1 obtained in Production Example 1, 47.5 parts by weight of pellets of the mixture of the block copolymer C1 and the block copolymer D1 obtained in Production Example 2, and 5 parts by weight of pellets of the masterbatch composition obtained above were homogenously dry blended in advance, and the mixture was placed into a twin screw extruder equipped with a T-die. Then, these were melted by heating at 200°C and kneaded in the twin screw extruder. After this operation was continued for 60 minutes, the product was cooled by extruding it onto a cooling roll, and the extruded product was formed into a film having an average thickness of 0.05 mm by winding it with a winding roll. During this operation, breakage of the film during formation and the amount of elapsed-time adhesion onto the cooling roll were measured by the above-mentioned methods. The resulting film molded body was measured for ozone crack resistance. The results are shown in Table 8. The conditions for forming the film are shown below in detail.

### (Conditions for forming film)

processing rate of compound: 5 kg/hour
film take-up rate: 4 m/min
extruder temperature: adjusted to 40°C in the inlet and to 200°C in the T-die
screw: full flight (with a kneading zone)
extruder L/D: 30
T-die: width of 200 mm, lip of 0.5 mm
distance between the distal end of the T-die and the cooling roll: 10 mm
cooling roll temperature: 25°C

### [Examples 2 to 5, Comparative Examples 1 to 5]

### (Preparation of masterbatch composition)

Masterbatch compositions were prepared in the same manner as in Example 1 except that the composition compounded was varied as shown in Table 8.

The components are as shown below. The hydrocarbon waxes 2 to 6 were subjected to gas chromatography mass spectrometry (GC-MS), which revealed that the total peak areas of the components were as shown in Table 7.
hydrocarbon wax 2: hydrocarbon wax (trade name "OZOACE 0355", available from NIPPON SEIRO CO., LTD.)
hydrocarbon wax 3: a mixture of 50% by weight of a hydrocarbon wax (trade name "PW-135", available from NIPPON SEIRO CO., LTD.) and 50% by weight of a hydrocarbon wax (trade name "SUNNOC P", available from Ouchi Shinko Chemical Industrial Co., Ltd.)
hydrocarbon wax 4: hydrocarbon wax (trade name "OZOACE 3201", available from NIPPON SEIRO CO., LTD.)
hydrocarbon wax 5: hydrocarbon wax (trade name "PW-135", available from NIPPON SEIRO CO., LTD.)
hydrocarbon wax 6: hydrocarbon wax (trade name "PW-115", available from NIPPON SEIRO CO., LTD.)
hydrocarbon wax 7: hydrocarbon wax (trade name "Sanwax 171P", available from Sanyo Chemical Industries, Ltd.)
polystyrene: polystyrene (trade name "GPPS 679", available from PS Japan Corporation)
low density polyethylene 1: low density polyethylene (trade name "NOVATEC LL LJ802", available from Japan Polyethylene Corporation)
low density polyethylene 2: low density polyethylene (trade name "Dowlex 2047G", available from Dow Corporation)

### (Preparation of aromatic vinyl-conjugated diene copolymer composition)

Aromatic vinyl-conjugated diene copolymer compositions were prepared in the same manner as in Example 1 except that the masterbatch compositions obtained above were used, and films were produced, measured, and evaluated as above. The results are shown in Table 8.

### [Table 7]

**Table 7**

| | Hydrocarbon wax 1 | Hydrocarbon wax 2 | Hydrocarbon wax 3 | Hydrocarbon wax 4 | Hydrocarbon wax 5 | Hydrocarbon wax 6 | Hydrocarbon wax 7 |
|---|---|---|---|---|---|---|---|
| Total peak area [%] of components having 22 or more and 23 or less carbon atoms | 3 | 4 | 4 | 3 | 6 | 32 | 0 |
| Total peak area [%] of components having 24 or more and 27 or less carbon atoms | 21 | 15 | 31 | 12 | 43 | 44 | 0 |
| Total peak area [%] of components having 27 or more and 30 or less carbon atoms | 31 | 16 | 38 | 19 | 46 | 15 | 0 |
| Total peak area [%] of components having 30 or more and 33 or less carbon atoms | 30 | 18 | 25 | 24 | 23 | 4 | 0 |
| Total peak area [%] of components having 33 or more and 36 or less carbon atoms | 19 | 20 | 12 | 23 | 7 | 2 | 0 |
| Total peak area [%] of components having 12 or more and 27 or less carbon atoms | 23 | 21 | 36 | 15 | 49 | 88 | 0 |
| Total peak area [%] of components having 37 or more and 60 or less carbon atoms | 17 | 37 | 12 | 34 | 1 | 0 | 100 |

### [Table 8]

**Table 8**

| | | | Examples | | | | | Comparative Examples | | | | |
|---|---|---|---|---|---|---|---|---|---|---|---|---|
| | | | 1 | 2 | 3 | 4 | 5 | 1 | 2 | 3 | 4 | 5 |
| Masterbatch composition | | | | | | | | | | | | |
| | Mixture of Block copolymer A1 and Block copolymer B1 | [parts] | 55 | | | 78 | | 65 | 52 | | | |
| | Mixture of Block copolymer C1 and Block copolymer D1 | [parts] | | 40 | | | | | | 40 | | |
| | Block copolymer B2 | [parts] | | | | | 60 | | | | | |
| | Polystyrene | [parts] | | | 70 | | | | | | | |
| | Low density polyethylene 1 | [parts] | | | | | | | | | 70 | 39 |
| | Low density polyethylene 2 | [parts] | | | | | | | | | | 39 |
| | Hydrocarbon wax 1 | [parts] | 40 | | 20 | | | | | | 20 | |
| | Hydrocarbon wax 2 | [parts] | | 50 | | | | | | | | |
| | Hydrocarbon wax 3 | [parts] | | | | 20 | | | | | | 20 |
| | Hydrocarbon wax 4 | [parts] | | | | | 40 | | | | | |
| | Hydrocarbon wax 5 | [parts] | | | | | | 30 | | | | |
| | Hydrocarbon wax 6 | [parts] | | | | | | | 40 | | | |
| | Hydrocarbon wax 7 | [parts] | | | | | | | | 50 | | |
| | Ultraviolet absorbing agent | [parts] | 5 | 10 | 10 | 2 | 0 | 5 | 8 | 10 | 10 | 2 |

| Aromatic vinyl-conjugated diene copolymer composition | | | | | | | | | | | | |
|---|---|---|---|---|---|---|---|---|---|---|---|---|
| | Mixture of Block copolymer A1 and Block copolymer B1 | [parts] | 47.5 | 47.5 | 47.5 | 47.5 | 47.5 | 47.5 | 47.5 | 47.5 | 47.5 | 47.5 |
| | Mixture of Block copolymer C1 and Block copolymer D1 | [parts] | 47.5 | 47.5 | 47.5 | 47.5 | 47.5 | 47.5 | 47.5 | 47.5 | 47.5 | 47.5 |
| | Masterbatch composition | [parts] | 5 | 5 | 5 | 5 | 5 | 5 | 5 | 5 | 5 | 5 |
| Breakage of film during formation | | | ○ | ○ | ○ | ○ | ○ | ○ | ○ | ○ | × | × |
| Ozone crack resistance (10°C) | | | ○ | ○ | ○ | ○ | ○ | ○ | ○ | × | ○ | ○ |
| Ozone crack resistance (23°C) | | | ○ | ○ | ○ | ○ | ○ | ○ | ○ | × | ○ | ○ |
| Ozone crack resistance (40°C) | | | ○ | ○ | ○ | ○ | ○ | ○ | × | × | ○ | ○ |
| Amount of elapsed-time adhesion onto cooling roll | | | ○ | ○ | ○ | ○ | ○ | × | × | ○ | ○ | ○ |

Tables 7 and 8 show that when films were formed using the masterbatch compositions each comprising 30 to 98% by weight of the aromatic vinyl polymer, and 2 to 70% by weight of the hydrocarbon wax (hydrocarbon compound group) containing the components having the total peak areas within the predetermined ranges of the present invention after they were compounded with the aromatic vinyl-conjugated diene copolymer, breakage of the film was effectively prevented, the amount of elapsed-time adhesion onto the cooling roll was reduced; thereby, occurrence of a bad appearance due to such adhesion was suppressed, excellent film molding properties were achieved, and films having excellent ozone crack resistance in a wide temperature region were obtained (Examples 1 to 5).

In contrast, when the hydrocarbon waxes (hydrocarbon compound group) each containing the components having the total peak areas out of the predetermined ranges defined in the present invention were used and films were formed, the amount of elapsed-time adhesion onto the cooling roll was increased, a bad appearance occurred, or ozone crack resistance at a low temperature (10°C) or a high temperature (40°C) was reduced (Comparative Examples 1 to 3) .

When a polymer other than the aromatic vinyl polymer was used in preparation of the masterbatch composition and films were formed, the films were broken (Comparative Examples 4 and 5).

## Claims

1. A masterbatch composition comprising:
30 to 98% by weight of an aromatic vinyl polymer containing at least one aromatic vinyl polymer block, and
2 to 70% by weight of a hydrocarbon compound group containing a plurality of hydrocarbon compounds having different numbers of carbon atoms in the range of 12 or more and 60 or less carbon atoms,
wherein when the hydrocarbon compound group is measured by gas chromatography mass spectrometry (GC-MS) to determine ratios of detected areas of the hydrocarbon compound components having different numbers of carbon atoms to the total peak area of the components having carbon atoms in the range of 12 or more and 60 or less carbon atoms where the total peak area of components having 12 or more and 60 or less carbon atoms is regarded as 100%,
the total peak area of components having 24 or more and 27 or less carbon atoms is 5% or more,
the total peak area of components having 27 or more and 30 or less carbon atoms is 5% or more,
the total peak area of components having 30 or more and 33 or less carbon atoms is 5% or more,
the total peak area of components having 33 or more and 36 or less carbon atoms is 5% or more, and
the total peak area of components having 12 or more and 27 or less carbon atoms is 45% or less.

2. The masterbatch composition according to claim 1, wherein when the hydrocarbon compound group is measured by gas chromatography mass spectrometry (GC-MS) to determine ratios of detected areas of the hydrocarbon compound components having different numbers of carbon atoms to the total peak area of the components having carbon atoms in the range of 12 or more and 60 or less carbon atoms where the total peak area of components having 12 or more and 60 or less carbon atoms is regarded as 100%,
the total peak area of the components having 24 or more and 27 or less carbon atoms is 8 to 40%,
the total peak area of the components having 27 or more and 30 or less carbon atoms is 8 to 50%,
the total peak area of the components having 30 or more and 33 or less carbon atoms is 10 to 45%,
the total peak area of the components having 33 or more and 36 or less carbon atoms is 7 to 30%, and
the total peak area of the components having 12 or more and 27 or less carbon atoms is 10 to 40%.

3. The masterbatch composition according to claim 1 or 2, wherein the aromatic vinyl polymer is an aromatic vinyl-conjugated diene copolymer containing at least one aromatic vinyl polymer block and at least one conjugated diene polymer block.

4. The masterbatch composition according to claim 3, wherein the aromatic vinyl-conjugated diene copolymer is an aromatic vinyl-conjugated diene copolymer composition comprising:
a block copolymer A represented by general formula (A): Ar1^{a}-D^{a}-Ar2^{a}, where Ar1^{a} represents an aromatic vinyl polymer block having a weight average molecular weight of 5,000 to 20,000, D^{a} represents a conjugated diene polymer block, and Ar2^{a} represents an aromatic vinyl polymer block having a weight average molecular weight of more than 20,000 and 400,000 or less, and
a block copolymer B represented by general formula (B): Ar1^{b}-D^{b}-Ar2^{b}, where Ar1^{b} and Ar2^{b} each represent an aromatic vinyl polymer block having a weight average molecular weight of 5,000 to 20,000, and D^{b} represents a conjugated diene polymer block.

5. The masterbatch composition according to claim 3, wherein the aromatic vinyl-conjugated diene copolymer is an aromatic vinyl-conjugated diene copolymer composition comprising:
a block copolymer C represented by general formula (C): (Ar^{c}-D^{c}) ₙ-X, where Ar^{c} represents an aromatic vinyl polymer block, D^{c} represents a conjugated diene polymer block, n represents an integer of 2 or more, and X represents a residue of a coupling agent, and
a block copolymer D represented by general formula (D): Ar^{d}-D^{d}, where Ar^{d} represents an aromatic vinyl polymer block, and D^{d} represents a conjugated diene polymer block.

6. An aromatic vinyl-conjugated diene copolymer composition comprising an aromatic vinyl-conjugated diene copolymer and the masterbatch composition according to any one of claims 1 to 5, the aromatic vinyl-conjugated diene copolymer containing at least one aromatic vinyl polymer block and at least one conjugated diene polymer block.

7. An elastic body formed from the aromatic vinyl-conjugated diene copolymer composition according to claim 6.

8. A film formed from the aromatic vinyl-conjugated diene copolymer composition according to claim 6.

9. A stretching member obtained using the elastic body according to claim 7 or the film according to claim 8.
